(19) **Europäisches Patentamt / European Patent Office / Office européen des brevets**

(11) **EP 1 871 119 B1**

(12) # EUROPEAN PATENT SPECIFICATION

(45) Date of publication and mention of the grant of the patent:
**17.05.2017 Bulletin 2017/20**

(51) Int Cl.:
***H04N 13/00*** *(2006.01)*

(21) Application number: **06119126.8**

(22) Date of filing: **17.08.2006**

(54) **Stereo image segmentation**

Bildsegmentierungsverfahren für stereoskopische Bilder

Segmentation d'images stéréoscopiques

(84) Designated Contracting States:
**AT BE BG CH CY CZ DE DK EE ES FI FR GB GR HU IE IS IT LI LT LU LV MC NL PL PT RO SE SI SK TR**

(30) Priority: **19.06.2006 GB 0612111**

(43) Date of publication of application:
**26.12.2007 Bulletin 2007/52**

(73) Proprietor: **Microsoft Technology Licensing, LLC Redmond, WA 98052 (US)**

(72) Inventors:
• **Criminisi, Antonio,**
c/o Microsoft Research Ltd.
**Cambridge, Cambridgeshire CB3 0FB (GB)**
• **Blake, Andrew,**
c/o Microsofr Research Ltd.
**Cambridge, Cambridgeshire CB3 0FB (GB)**
• **Cross, Geoff,**
c/o Microsoft Research Ltd.
**Cambridge, Cambridgeshire CB3 0FB (GB)**

(74) Representative: **Wallis, Helen Frances Mary Olswang LLP 90 High Holborn London WC1V 6XX (GB)**

(56) References cited:
• **KOLMOGOROV V ET AL: "Probabilistic fusion of stereo with color and contrast for bi-layer segmentation" TECHNICAL REPORT MICROSOFT RESEARCH MSR TR, XX, XX, no. TR-2005-35, June 2005 (2005-06), pages 1-18, XP002392051**
• **BING-BING CHAI ET AL: "Mesh-based depth map compression and transmission for real-time view-based rendering" PROCEEDINGS 2002 INTERNATIONAL CONFERENCE ON IMAGE PROCESSING. ICIP 2002. ROCHESTER, NY, SEPT. 22 - 25, 2002, INTERNATIONAL CONFERENCE ON IMAGE PROCESSING, NEW YORK, NY : IEEE, US, vol. VOL. 2 OF 3, 22 September 2002 (2002-09-22), pages 237-240, XP010607952 ISBN: 0-7803-7622-6**
• **EDOUARD FRANCOIS ET AL: "Depth-Based Segmentation", IEEE TRANSACTIONS ON CIRCUITS AND SYSTEMS FOR VIDEO TECHNOLOGY, IEEE SERVICE CENTER, PISCATAWAY, NJ, US, vol. 7, no. 1, 1 February 1997 (1997-02-01), XP011014347, ISSN: 1051-8215**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

Separating a foreground layer from video in real time may be useful in many applications such as live background substitution, pan/tilt/zoom, object insertion, and the like in teleconferencing, live meeting, or other video display applications. Separating a foreground layer in real time demands layer separation to near Computer Graphics quality, but with computational efficiency sufficient to attain live streaming speed.

The paper by Chai, Sethuraman and Hatrack entitled "Mesh-based Depth Map Compression and Transmission for Real-time View-based Rendering" (In Proc. IEEE International Conference on Image Processing 2002, Vol. 2, 237-240) describes a simplified triangular mesh representation that can be encoded efficiently. The mesh geometry is encoded using a binary triangle tree structure and the depths at the tree nodes are differently coded. FRANCOIS Edouard, Depth-Based Segmentation, IEEE TRANSACTIONS ON CIRCUITS AND SYSTEMS FOR VIDEO TECHNOLOGY, VOL.7, NO.1, FEBRUARY 1997 discloses a method of stereo image segmentation comprising computing a stereo likelihood for each pixel in a first pair of stereo images in a sequence of pairs of stereo images and performing image segmentation on the first pair of stereo images based on the computed stereo likelihood for each pixel.

SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

Stereo image segmentation is performed on a first stereo image pair in a sequence of stereo image pairs using a computed likelihood value for each pixel in the pair of stereo images. Stereo image segmentation is then performed on subsequent image pairs using new computed values for the likelihood where change is detected in a pixel. However, where no change is detected in a pixel, a new value of the likelihood is not computed and the value for the pixel in the previous frame is re-used instead when performing the stereo image segmentation.

The present example provides a method of stereo image segmentation comprising: computing a stereo likelihood for each pixel in a first pair of stereo images in a sequence of pairs of stereo images; and performing image segmentation on the first pair of stereo images based on the computed stereo likelihood for each pixel; and characterised in that the method further comprises: selecting an image from a second pair of stereo images in the sequence and determining based on an image from an immediately preceding pair of stereo images, for each pixel, if a change has occurred using an algorithm including one or more motion likelihoods for each pixel; for each pixel where a change has occurred, computing a stereo likelihood for the pixel in the second pair of stereo images; for each pixel where a change has not occurred, identifying a stereo likelihood for the pixel equal to the value of the stereo likelihood for the pixel in the immediately preceding pair of stereo images; and performing image segmentation on the second pair of stereo images based on the computed stereo likelihood for each pixel where a change has occurred and based on the identified stereo likelihood for each pixel where a change has not occurred.

The method may further comprise: selecting an image from a third pair of stereo images in the sequence and determining based on an image from an immediately preceding pair of stereo images, for each pixel, if a change has occurred using an algorithm including one or more motion likelihoods for each pixel; for each pixel where a change has occurred, computing a stereo likelihood for the pixel in the third pair of stereo images; for each pixel where a change has not occurred, identifying a stereo likelihood for the pixel equal to the value of the stereo likelihood for the pixel in the immediately preceding pair of stereo images; performing image segmentation on the third pair of stereo images based on the computed stereo likelihood for each pixel where a change has occurred and based on the identified stereo likelihood for each pixel where a change has not occurred; and repeating the selecting, computing, identifying and performing steps for a next pair of stereo images in the sequence.

The method may further comprise: computing a second likelihood for each pixel in the first pair of stereo images in the sequence, wherein image segmentation on the first pair of stereo images is based on both the computed stereo and second likelihoods for each pixel; for each pixel in the second pair of stereo images where a change has occurred, computing a second likelihood for the pixel in the second pair of stereo images; for each pixel in the second pair of stereo images where a change has not occurred, identifying a second likelihood for the pixel equal to the value of the second likelihood for the pixel in the immediately preceding pair of stereo images; and wherein performing image segmentation on the second pair of stereo images is based on the computed stereo and second likelihoods for each pixel where a change has occurred and based on the identified stereo and second likelihoods for each pixel where a change has not occurred.

The method may further comprise: prior to performing image segmentation on the second pair of images:

selecting an image from the second pair of stereo images in the sequence and determining a texture parameter associated with each pixel; and wherein for each pixel where the texture parameter does not exceed a predefined threshold, performing image segmentation on the second pair of stereo images is: based on the computed second likelihood for each pixel where a change has occurred; and based on the identified second likelihood for each pixel where a change has not occurred.

The method may alternatively further comprise: computing a second likelihood for each pixel in the first pair of stereo images in the sequence, wherein image segmentation on the first pair of stereo images is based on both the computed stereo and second likelihoods for each pixel; for each pixel in the second pair of stereo images, computing a second likelihood for the pixel in the second pair of stereo images; and wherein performing image segmentation on the second pair of stereo images is based on the computed stereo and second likelihoods for each pixel where a change has occurred and based on the identified stereo likelihood and computed second likelihood for each pixel where a change has not occurred.

The method may further comprise, prior to performing image segmentation on the second pair of stereo images: selecting an image from the second pair of stereo images in the sequence and determining a texture parameter associated with each pixel; and wherein for each pixel where the texture parameter does not exceed a predefined threshold, performing image segmentation on the second pair of stereo images is based on the computed second likelihood for each pixel.

Determining a texture parameter associated with each pixel may comprise: for each pixel where a change has occurred, computing a texture parameter associated with the pixel; and for each pixel where a change has not occurred, identifying a texture parameter for the pixel equal to the value of the texture parameter for the pixel in the immediately preceding pair of stereo images.

The second likelihood may comprise a contrast / colour likelihood.

Determining based on an image from the immediately preceding pair of stereo images, for each pixel, if a change has occurred using an algorithm including one or more motion likelihoods for each pixel may comprise: computing a motion likelihood for each pixel; and determining if change is detected using the motion likelihood and a change detection algorithm.

The motion likelihood may comprise a function of one of: contrast and a rate of change of intensity.

Determining based on an image from the immediately preceding pair of stereo images, for each pixel, if a change has occurred using an algorithm including one or more motion likelihoods for each pixel may comprise: computing a first motion likelihood and a second motion likelihood for each pixel, wherein the first motion likelihood is associated with a first segmentation precondition and the second motion likelihood is associated with a second segmentation precondition; and determining if change is detected using the first and second motion likelihoods and a change detection algorithm.

The change detection algorithm may be based on data from a test sequence of pairs of stereo images.

The method may further comprise: prior to computing a stereo likelihood for each pixel in the first pair of stereo images in the sequence, filtering the first pair of stereo images to reduce noise; and prior to determining based on an image from the immediately preceding pair of stereo images, for each pixel in the selected image from the second pair of stereo images, if a change has occurred, filtering the second pair of stereo images to reduce noise.

A Gaussian filter may be used to filter each image to reduce noise.

The images may comprise rectified images.

A second example provides a computer program comprising computer program code means adapted to perform all the steps of any of the methods described herein when said program is run on a computer.

The computer program may be embodied on a computer readable medium.

A third example provides an apparatus comprising: a processor; and a memory arranged to store executable instructions arranged to cause the processor to: compute a stereo likelihood for each pixel in a first pair of stereo images in a sequence of pairs of stereo images; and perform image segmentation on the first pair of stereo images based on the computed stereo likelihood for each pixel; and characterised in that the memory is further arranged to store executable instructions arranged to cause the processor to: select an image from a second pair of stereo images in the sequence and determining based on an image from an immediately preceding pair of stereo images, for each pixel, if a change has occurred using an algorithm including one or more motion likelihoods for each pixel; for each pixel where a change has occurred, compute a stereo likelihood for the pixel in the second pair of stereo images; for each pixel where a change has not occurred, identify a stereo likelihood for the pixel equal to the value of the stereo likelihood for the pixel in the immediately preceding pair of stereo images; and perform image segmentation on the second pair of stereo images based on the computed stereo likelihood for each pixel where a change has occurred and based on the identified stereo likelihood for each pixel where a change has not occurred.

The methods described herein may be performed by software in machine readable form on a storage medium. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

It will be appreciated that the features associated with the method as described herein are also applicable to the apparatus described herein.

Many of the attendant features will be more readily appreciated as the same becomes better understood by reference to the following detailed description considered in connection with the accompanying drawings.

DESCRIPTION OF THE DRAWINGS

The present description will be better understood from the following detailed description read in light of the accompanying drawings, wherein:

FIG. 1 is an example flow diagram of a method of stereo image segmentation;
FIG. 2 shows a more detailed example flow diagram of a method of stereo image segmentation;
FIG. 3 is an example flow diagram of a method of detecting change;
FIG. 4 shows two examples of normalised histograms;
FIG. 5 shows two examples of normalised histograms;
FIG. 6 shows a graph in which two motion likelihood functions have been superimposed;
FIG. 7 shows a second more detailed example flow diagram of a method of stereo image segmentation;
FIG. 8 shows a first schematic diagram of the functional elements in a stereo segmentation system;
FIG. 9 shows a second schematic diagram of the functional elements in a stereo segmentation system; and
FIG. 10 shows a schematic diagram of an apparatus for stereo segmentation.

Like reference numerals are used to designate like parts in the accompanying drawings.

DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

Many techniques have been developed for the extraction of layer information from images, for example using the stereo information from pairs of left and right images or using colour / contrast information within an image. The performance of techniques that use stereo to extract the layers degrades in regions where there is little texture (e.g. blank walls, sky and saturated image areas). Colour / contrast based segmentation techniques are however effective in the absence of texture but are beyond the capability of fully automatic methods. This is because there is insufficient information in colour alone and so extra information is required and this is provided by a user who marks some foreground and/or background areas. Models have therefore been proposed which combine the use of stereo information with information relating to colour, contrast and coherence, as described in the paper by V. Kolmogorov, A. Criminisi, A. Blake, G. Cross and C. Rother entitled "Bi-layer segmentation of binocular stereo" (In Proc. IEEE Conf. Computer Vision and Pattern Recognition 2005, 2, 407-414) and in pending US Patent Application No. 11/195027, entitled "Stereo Image Segmentation" filed 2 August 2005.

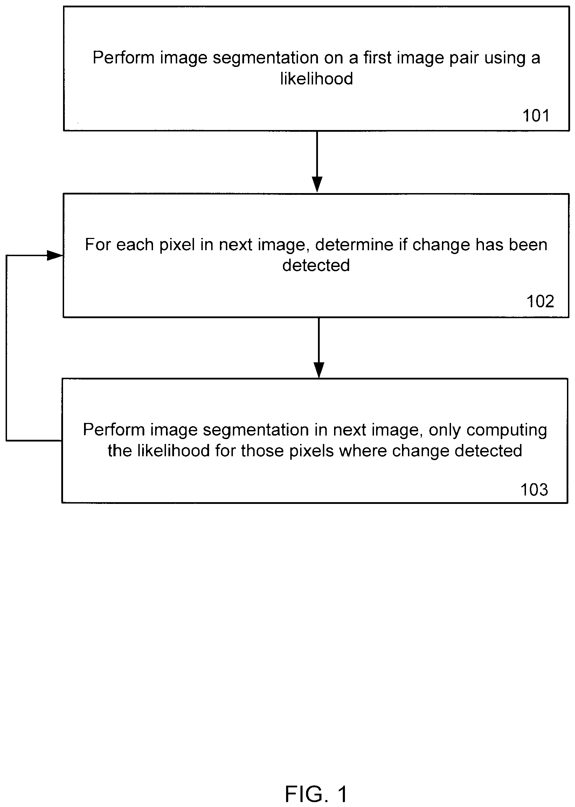

FIG. 1 is an example flow diagram of a method of stereo image segmentation. Image segmentation is performed on a first image pair, e.g. a first pair of left and right images in a sequence of images, (step 101). This image segmentation involves computing, for each pixel, one or more probabilities that the pixel is part of a particular layer within the image (e.g. the background or the foreground) based on different factors and then using these computed probabilities to decide which layer each pixel belongs to. These probabilities are referred to as likelihoods and the different factors may include one or more of: colour, stereo information, contrast, coherence etc. Particular examples of the image segmentation process are described in more detail below.

Having performed image segmentation on the first pair of images, the method then considers the next image pair in the sequence and for each pixel in one of the images of the next image pair (e.g. the left or the right image of the second pair of images in the sequence of images) it is then determined whether a change in that pixel has occurred (step 102). This determination of change may be based on one or more factors and this step is described in more detail below. Image segmentation is then performed on the image pair (e.g. the second pair of images in the sequence) in a similar manner to the image segmentation described above, but in which all the likelihoods are computed for those pixels where change has been detected whilst none of the likelihoods or alternatively only a subset of the likelihoods are computed for those pixels where change has not been detected (step 103). Where likelihoods are not computed (because change has not been detected in a pixel), the image segmentation uses the values of those likelihoods used in the segmentation of the previous image pair (e.g. for the second image in a sequence, these will be the values computed in step 101). This can be shown by three examples showing different combinations of likelihoods and computation of likelihoods dependent upon whether change has been detected.

In a first example, in which only a single likelihood is used:

| Image pair 1, pixel 1: | Stereo likelihood = S1 |
| | → Background layer (step 101) |
| Image pair 1, pixel 2: | Stereo likelihood = S2 |
| | → Background layer (step 101) |
| Image pair 2, left image, pixel 1: | No change detected (in step 102) |
| Image pair 2, pixel 1: | Stereo likelihood = S1 (from previous image) |
| | → Background layer (step 103) |
| Image pair 2, left image, pixel 2: | Change detected (in step 102) |
| Image pair 2, pixel 1: | Stereo likelihood = S4 (computed) |
| | → Foreground layer (step 103) |

In a second example, in which two likelihoods are used, but only one is not computed if change is not detected:

| Image pair 1, pixel 1: | Stereo likelihood = S1 |
| | Colour likelihood = C1 |
| | → Background layer (step 101) |
| Image pair 1, pixel 2: | Stereo likelihood = S2 |
| | Colour likelihood = C2 |
| | → Background layer (step 101) |
| Image pair 2, left image, pixel 1: | No change detected (in step 102) |
| Image pair 2, pixel 1: | Stereo likelihood = S1 (from previous image) |
| | Colour likelihood = C3 (computed) |
| | → Background layer (step 103) |
| Image pair 2, left image, pixel 2: | Change detected (in step 102) |
| Image pair 2, pixel 1: | Stereo likelihood = S4 (computed) |
| | Colour likelihood = C4 (computed) |
| | → Foreground layer (step 103) |

In a third example, in which two likelihoods are used and both are not computed if change is not detected:

| Image pair 1, pixel 1: | Stereo likelihood = S1 |
| | Colour likelihood = C1 |
| | → Background layer (step 101) |
| Image pair 1, pixel 2: | Stereo likelihood = S2 |
| | Colour likelihood = C2 |
| | → Background layer (step 101) |
| Image pair 2, left image, pixel 1: | No change detected (in step 102) |
| Image pair 2, pixel 1: | Stereo likelihood = S1 (from previous image) |
| | Colour likelihood = C1 (from previous image) |
| | → Background layer (step 103) |
| Image pair 2, left image, pixel 2: | Change detected (in step 102) |
| Image pair 2, pixel 1: | Stereo likelihood = S4 (computed) |
| | Colour likelihood = C4 (computed) |
| | → Foreground layer (step 103) |

The process (steps 102, 103) is then repeated for the next image pair in the sequence etc. By not computing some or all of the likelihoods where no change has been detected, the computational load involved in the segmentation process is reduced, therefore increasing the efficiency of the image segmentation process.

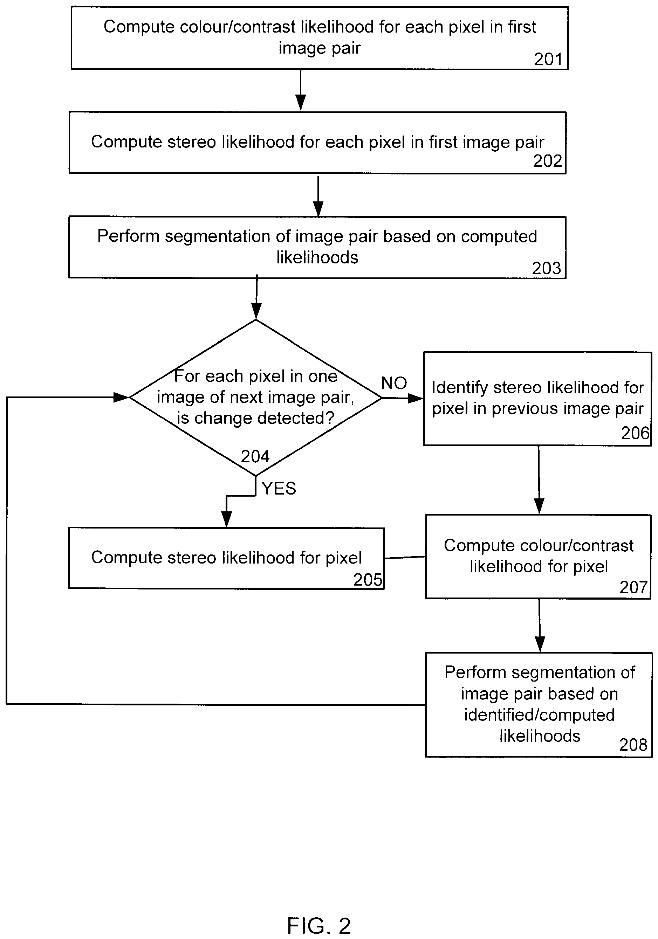

FIG. 2 shows a more detailed example flow diagram of a method of stereo image segmentation, which uses colour / contrast likelihood and stereo likelihood in the image segmentation process. It will be appreciated that this is by way of example only and the image segmentation process may use different and / or additional likelihoods. The colour / contrast likelihoods are computed for each pixel in a first image pair (step 201) and the stereo likelihoods are also computed for each pixel in this first image pair (step 202). Segmentation is then performed using these computed likelihoods (step 203) to determine which layer each pixel in the image pair belongs to (e.g. the foreground or the background layer). Each pixel in one of the images from the next image pair (e.g. the second image pair) is then analysed to see whether change is detected (step 204). If change is detected (in step 204), the stereo likelihood for that pixel in the image pair is computed (step 205), whilst if no change is detected (in step 204), the stereo likelihood for the particular pixel in the previous image pair (e.g. the first image pair) is used as the stereo likelihood for that pixel in the image pair currently being segmented (e.g. the second image pair, step 206). The colour / contrast likelihoods are computed for each pixel in the image pair (step 207) and segmentation is then performed (step 208) using these computed colour / contrast likelihoods (from step 207) and the stereo likelihoods (from step 205 or 206) to determine which layer each pixel in the image pair belongs to (e.g. the foreground or the background layer).

As the computation of the stereo likelihood is significantly more computationally intensive than the computation of the colour / contrast likelihood (e.g. it may require the computation of 30-60 NSSDs, see equation (12) below), the elimination of this computation where no change is detected in a pixel provides a significant reduction in the computational load whilst not impacting the accuracy of the segmentation process.

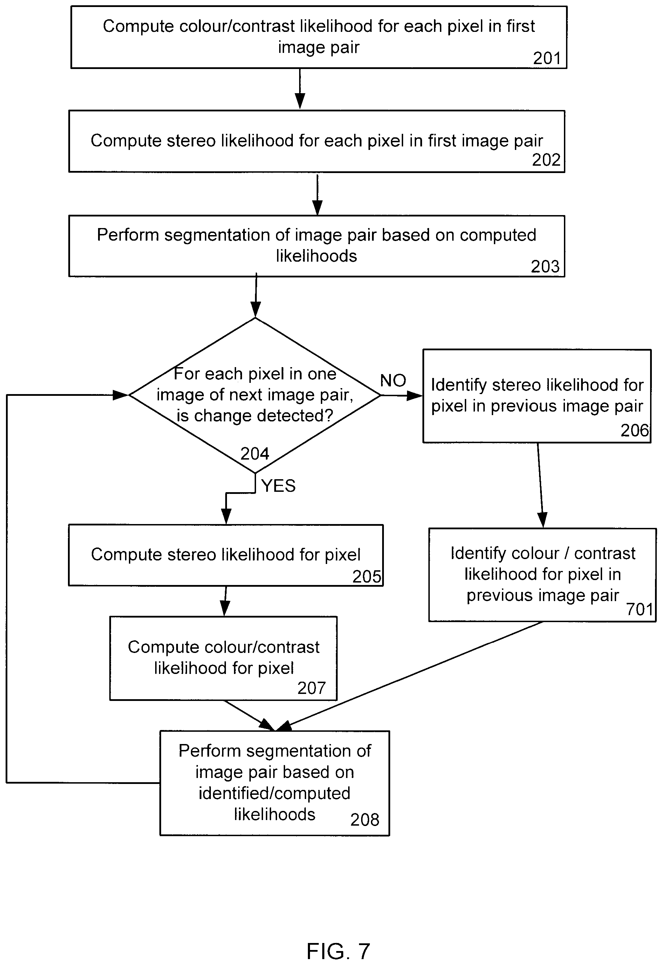

In another example method of stereo segmentation however, the colour likelihood may also only be computed for those pixels where change has been detected (in step 204), as shown in FIG. 7. Where change is not detected (in step 204) both the stereo likelihood (step 206) and the colour/contrast likelihood (step 701) for the pixel in the previous image pair are identified and used to perform image segmentation (step 208).

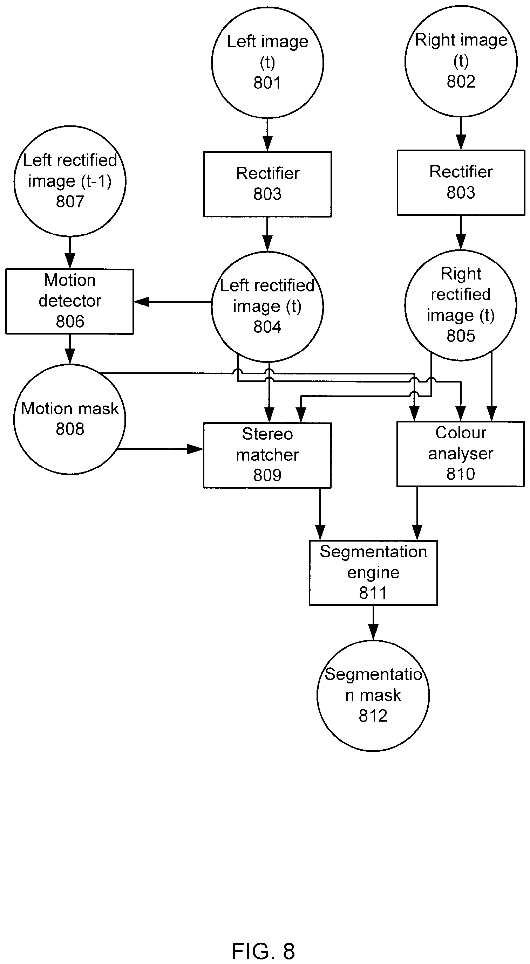

The methods shown in FIGS. 2 and 7 may be performed by a stereo segmentation system as shown in the schematic diagram of FIG. 8. Inputs to the system are a left image at time t 801 and a right image at time t 802. These images may require rectification by a rectifier 803 to produce a left and a right rectified image 804, 805. Use of a rectifier may be required where the two cameras used to capture the left and right images are not co-planar. In such a situation, the rectifier elements 803 modify the image data 801, 802 so that they are as they would be if the two cameras were co-planar. A previous image pair (at time t-1) may already have been segmented as described above (steps 201-203). One of the rectified images at time t (e.g. left rectified image at time t 804) is fed into a motion detector 806 along with the same of the images from the previous image pair (e.g. the left rectified image at time t-1 807). The motion detector 806 determines whether a change as occurred in each of the pixels in the input image 804 (step 204) and outputs a motion mask 808. This motion mask 808 identifies those pixels where change has been detected and / or those pixels where change has not been detected. The motion mask 808 may then be fed into one or more of the elements which compute likelihoods, e.g. the stereo matcher 809 and / or the colour analyser 810. For the method of FIG. 2 the motion mask 808 would be fed into just the stereo matcher 809, whilst for the method of FIG. 7, the motion mask 808 would be fed into both the stereo matcher 809 and the colour analyser 810. These elements that compute likelihoods 809, 810 use the motion mask 808 (where received) to determine whether to compute a new likelihood for a pixel or whether to output a previously computed likelihood value for that pixel to a segmentation engine 811 which performs the image segmentation (step 208). The output of the segmentation engine 811 is a segmentation mask 812 which identifies which layer each pixel belongs to (e.g. to the foreground or the background layer).

Although in FIG. 8, the motion mask 808 is shown being input to the stereo matcher 809 and the colour analyser 810, in another the example the motion mask 808 may additionally be input to the segmentation engine 811 such that segmentation is only performed on those pixels where change has been detected and for those where no change has been detected, the same layer allocation as the corresponding pixel in the previous image is used.

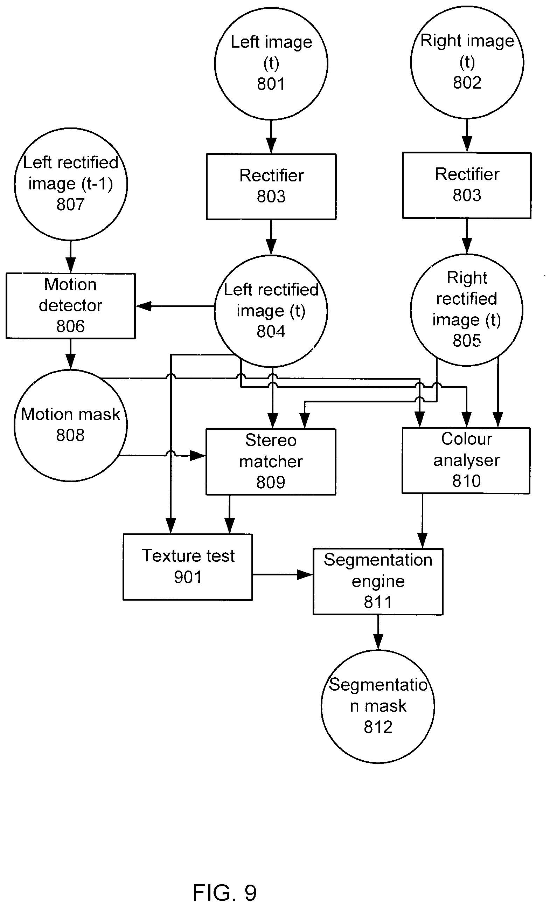

As described above, the performance of techniques that use stereo to extract the layers degrades in regions where there is little texture (e.g. blank walls, sky and saturated image areas). This may result in a stereo matcher 809 producing erroneous values of a stereo likelihood which are then used in performing image segmentation (in segmentation engine 811, step 208). To mitigate against this, a texture test element 901 may be introduced into a stereo segmentation system as shown in the schematic diagram of FIG. 9. The texture test element 901 looks at one of the image pair (e.g. the left rectified image at time t 804) and runs a filter over the image to identify the areas of the image where there is little / no texture (or contrast) such that the performance of the stereo matcher 809 is likely to be degraded. The texture test element 901 may then filter the output of the stereo matcher 809 such that data relating to those identified areas of little / no texture is not passed to the segmentation engine 811 and is therefore not used in segmentation (step 208). This filters out data which is potentially erroneous and might therefore lead to incorrect segmentation. Where the stereo likelihood data is filtered out, the segmentation is therefore performed based on the other likelihood data (such as the colour / contrast data).

In order to reduce the computational load of the texture test element 901, the motion mask 808 may be input to this element (not shown in FIG. 9) such that the texture analysis is not performed on areas of the image where no change has been detected and instead the previous texture analysis results for these areas may be used to determine whether the stereo likelihood data should be filtered.

It will be appreciated that although the description above relating to a texture test relates to the filtering of stereo likelihood data, in other examples, other filters may be used to filter out other likelihood data based on predetermined criteria.

The detection of change (also referred to as motion) likelihoods in a pixel (in step 102 or 204 and motion detector 806) may be performed via a computation of optical flow. However, this is computationally intensive and complex. An alternative approach is to use a change likelihood at each pixel in the image, based on one or more different aspects of a pixel, such as contrast ($\nabla I$) and rate of change of intensity (dI/dt, where t= time). A motion likelihood may have the form:

$$f(m_t|S)$$

where:

$f$ is a function learned from some ground truth data
$m_t$ is the change (or motion) parameter for a pixel at time t
S is the segmentation precondition, based on one or more previous image pairs (also referred to as frames)

In an example where a sequence of images is segmented into two layers, foreground (F) or background (B), the segmentation precondition may have two values, F or B, where only the segmentation result in the previous frame (t-1) is considered. In such an example, the detection of change may be based upon two motion likelihoods:

$$f(m_t|F) \text{ and } f(m_t|B)$$

These motion likelihoods are described in more detail in the paper by A. Criminisi, G. Cross, A. Blake and V. Kolmogorov entitled "Bilayer Segmentation of Live Video" (In Proc. IEEE Conf. Computer Vision and Pattern Recognition 2006). It will be appreciated that there may be any number of motion likelihoods and any number of different segmentation preconditions which may be used in the detection of change.

For the purposes of explanation, the following description relates to bilayer segmentation (layers F and B) where the detection of change is based on two motion likelihoods (f ($m_t|F$) and f ($m_t|B$)). It will be appreciated that other examples may include a different number of layers (e.g. more than two layers) and / or a different number of motion likelihoods (e.g. only one or four).

Change is detected using an algorithm including the motion likelihoods, for example:

$$\text{Change detected where } f(m_t|F) > f(m_t|B) - \theta$$

where:

$\theta$ is the motion detection threshold, which may have any value (including zero)

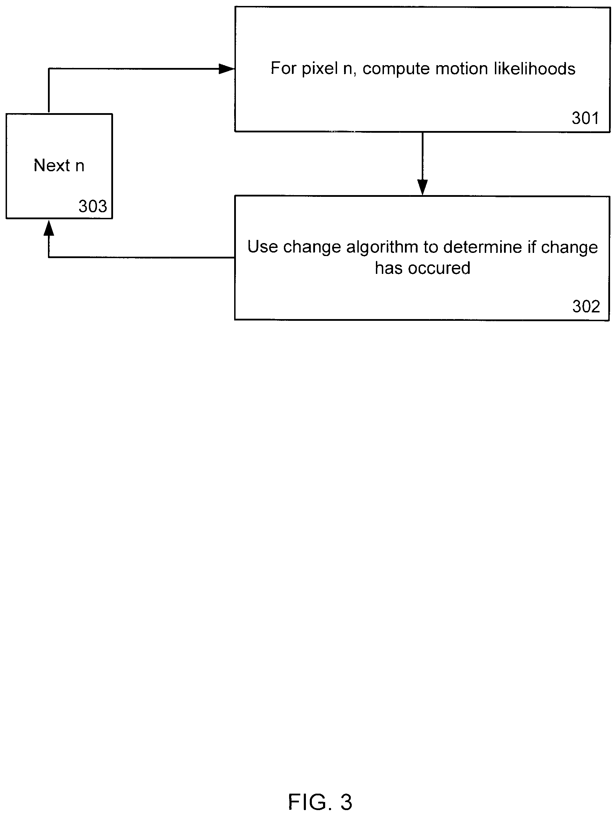

Consequently, the detection of change (e.g. in steps 102 and 204) may be performed by, for pixel n, computing the two motion likelihoods (step 301), inserting the computed values into the change detection algorithm and determining whether the condition for change is met (step 302) and then moving to the next pixel (step 303), as shown in FIG. 3. The process is repeated for each pixel in one of the images in the image pair (e.g. the left or the right image) so as to determine those pixels where change has been detected and therefore where all of the likelihoods (e.g. the stereo likelihood in addition to the colour / contrast likelihood as in FIG. 2 or all the likelihoods as in FIG. 7) need to be computed (steps 103, 205, 207).

The value of the motion detection threshold ($\theta$) may be selected according to the requirements for the image selection process. If the value of $\theta$ is increased, the speed of the segmentation process is reduced (i.e. computational load is increased) whilst the accuracy of the segmentation process increased. Conversely, if the value of θ is decreased, the speed of the segmentation process is increased (i.e. computational load is decreased, because fewer stereo likelihood computations are being performed) whilst the accuracy of the segmentation process increased.

The value of the motion (or change) parameter $m_t$ for a pixel is based on one or more aspects of the pixel at time t. In a first example the parameter may comprise a measure of the contrast of the pixel ($\nabla I$) and the rate of change of intensity (dI/dt) of the pixel:

$$m_t = (|\nabla I|, |dI/dt|)$$

where:

$$dI/dt = I_t - I_{t-1}$$

In another example, the value of the motion parameter $m_t$ may be simplified, particularly where the detection of change is used to determine whether the stereo likelihood is computed (as in FIG. 2). In such an example:

$$m_t = (|dI/dt|)$$

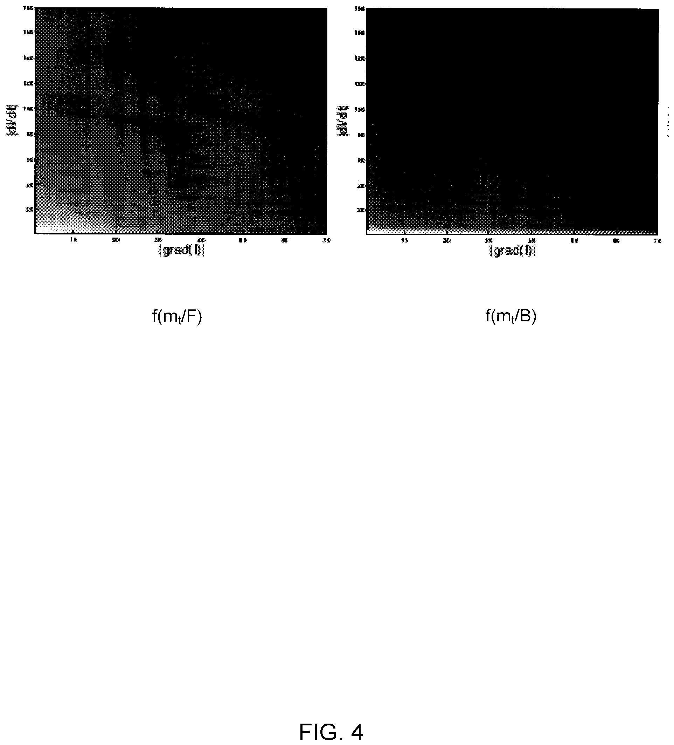

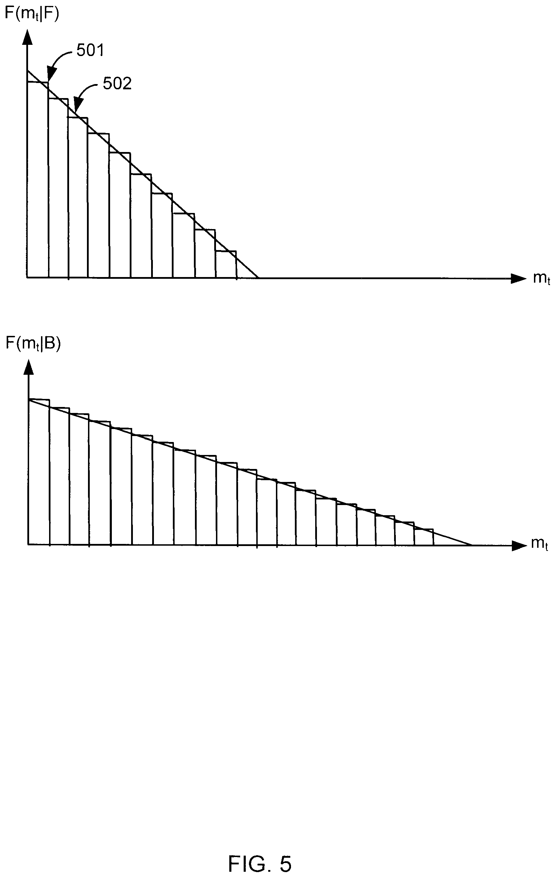

The value of the motion likelihoods (e.g. $f(m_t|f)$ and $f(m_t|B)$) may be determined using a normalised histogram (or a function which approximates to the normalised histogram) created using one or more test sequences in which pixels in each image have been labelled as background or foreground (also referred to as 'ground truth data'. Two examples of normalised histograms are shown in FIG. 4 where the motion parameter $m_t$ has two components, the contrast of the pixel ($\nabla I$) and the rate of change of intensity (dI/dt) and the value of the motion likelihood is represented by the colour of the particular point in the 2D histogram. Two further examples of normalised histograms are shown in FIG. 5 where the motion parameter $m_t$ has a single component, (e.g. the rate of change of intensity (dI/dt)) which is shown along the x-axis. The value of the motion likelihood is shown on the y-axis. The histograms in FIG. 5 show an example of the frequency bars 501 obtained using the test sequence of images and the approximated function, f, 502.

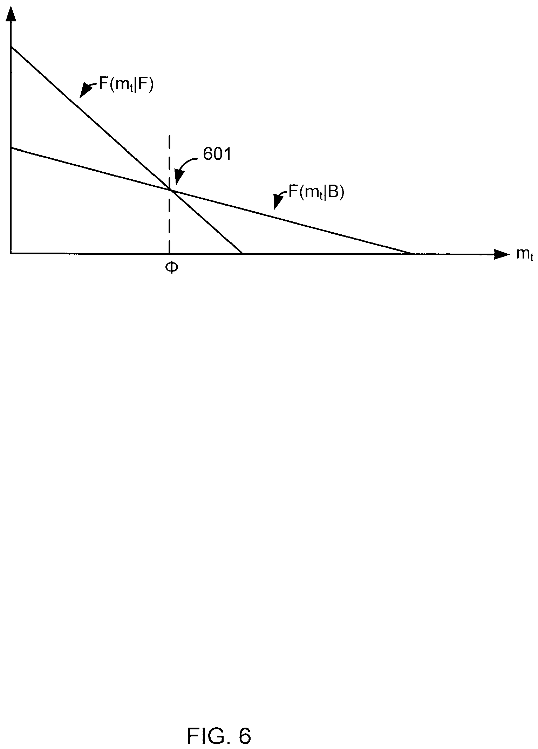

FIG. 6 shows a graph in which the two motion likelihood functions (e.g. $f(m_t|f)$ and $f(m_t|B)$) have been super-imposed. Given that the two intersect 601 where $m_t = \phi$, the change algorithm may be further simplified to:

$$\text{Change detected where } m_t < \phi \text{ (where } \theta = 0)$$

If $m_t = dI/dt$, then this can be re-written as:

$$\text{Change detected where } dI/dt < \phi$$

In an example, the change algorithm may comprise:

$$\log p(m_t|F) > \log p(m_t|B) - \theta$$

where:

$$m_t = dI/dt$$

$$\theta = 0.4$$

The value of the motion detection threshold (θ) as given above has been selected such that it is biased towards false positives, which ensures that no pixels that need updating are missed (i.e. by a change not being detected), whilst being more computationally intensive than if a lower value of θ was used. This algorithm has been demonstrated to provide increases in the speed of segmentation by factors of three and above (dependent upon the nature of the image sequence) whilst not significantly impacting the accuracy of the segmentation process (e.g. the percentage of pixels labelled differently using this process compared to always computing all the likelihoods is less than 0.2%). For image sequences where there is only a small amount of movement, the segmentation speed can be increased by several orders of magnitude, therefore representing a very large computational saving.

Prior to performing the image segmentation process (e.g. prior to steps 101 and 201), the images may be processed using a Gaussian filter (also referred to as a Gaussian convolution) to smooth out the noise (e.g. on a frame by frame basis). The standard deviation,σ, of the Gaussian filter may be chosen so as to improve the accuracy of the image segmentation process. In an example, the Gaussian filter may be selected to have σ = 3.0.

In the above description, the change detection (e.g. in steps 102 and 204 and in the motion detector 806) is based on data relating to the current image pair (e.g. left rectified image at time t 804) and the previous image pair (e.g. left rectified image at time t-1 807), the change detection may in addition use information relating to other earlier image pairs (e.g. images at time t-2, t-3 etc). However, there may be little additional benefit to using this extra information particularly where the parameters are selected (as described above) to err on the side of false positives.

Although the above description relates to efficiency improvements which may be achieved when processing an existing sequence of images, the efficiency may be further improved by switching off any automatic gain control (AGC) function in the cameras used to capture the image sequences. This reduces the number of false positives (i.e. change detected when no change occurred) and therefore reduces the amount of computation which is required to perform the image segmentation.

The image segmentation process described above (e.g. in steps 101, 103, 203, 208 and in the segmentation engine 811) may be performed in a number of different ways. Two suitable ways are described in the paper by V. Kolmogorov, A. Criminisi, A. Blake, G. Cross and C. Rother entitled "Probabilistic fusion of stereo with colour and contrast for bi-layer segmentation" (IEEE Trans. Pattern Analysis and Machine Intelligence, 2006) and in pending US Patent Application No. 11/252017, entitled " Image Segmentation" filed 17 October 2005 which claims priority from US Provisional Patent Application, Serial No. 60/691865 filed 17 June 2005.

The paper and patent applications detailed above describe two approaches to segmentation: Layered Dynamic Programming (LDP) and Layered Graph Cut (LGC). Each works by fusing likelihoods for stereo-matching, colour and contrast to achieve segmentation quality unattainable from either stereo or colour/contrast on their own. These two approaches have several common components to their probabilistic models and these common components are described below and followed by a detailed description of each algorithm.

In the following description, the notation is as follows. Pixels in the rectified left and right images are indexed by $m$ and $n$ respectively, so the images are denoted.

$$\mathbf{L} = \{L_m, \; m = 1, \ldots, N\}, \; \mathbf{R} = \{R_n, \; n = 1, \ldots, N\}.$$

The data is, therefore, referred to jointly as z = (L,R). In addition an array x of state variables is defined, either in left-image coordinates x = $\{x_m\}$, or, in cyclopean coordinates, as x = $\{x_k\}$, and takes values $x_k \in \{F,B,O\}$ according to whether the pixel is a foreground match, a background match or occluded. Stereo disparity is defined to be $d = m - n$ and the disparity values along one epipolar line are expressed as d = $\{d_k, k = 1,...,2N - 1\}$. Note this means that

$$m = \frac{(k + d_k)}{2} \;\; \text{and} \;\; n = \frac{(k - d_k)}{2}, \qquad (1)$$

So that $k,d$ forms an alternative cyclopean coordinate system for the space of epipolar matches, which is well known to be helpful for probabilistic modelling of stereo matching. The two algorithms described are each based on different image coordinate systems, one on cyclopean coordinates($k,d$) and the other on left image-based coordinates($m,d$).

The notation for a complete match of two images is therefore the combined vector (d,x) of disparities and states and a posterior distribution over (d,x), conditioned on image data can be defined.

A Gibbs energy $E(z,d. x; \theta)$ is defined to specify the posterior over the inferred sequence (d,x), given the image data z , as:

$$p(\mathbf{x}, \mathbf{d} \mid \mathbf{z}) \propto \exp - E(\mathbf{z}, \mathbf{d}, \mathbf{x}; \theta). \qquad (2)$$

Here $\theta$ is a vector of parameters for the model, which will need to be set according to their relation to physical quantities in the stereo problem, and by learning from labelled data. The posterior could be globally maximized to obtain a segmentation x and also stereo disparities d. As this is used to compute a segmentation, the posterior should, in principle, be marginalized with respect to d, and then maximized with respect to x to estimate a segmentation

$$\hat{x} = \arg\max_{x} \sum_{d} p(x, d \mid z). \qquad (3)$$

The model (2) can be regarded simply as Conditional Random Field (CRF), without any generative explanation/decomposition in terms of priors over (x,d)and data likelihoods. However, simpler forms of the model do admit a generative decomposition, and this is helpful also in motivating the structure of a fuller CRF model that is not so naturally decomposed. One reasonable model has a Gibbs energy with the following decomposition:

$$E(z, x, d; \theta) = V(x, d; \theta) + U^{M}(z, x, d; \theta) + U^{C}(z \mid x; \theta). \qquad (4)$$

in which the role of each of the three terms is as follows:

- Prior: an MRF prior for (x,d) has an energy specified as a sum of unary and pairwise potentials:

$$V(x, d; \theta) = \sum_{(k, k') \in \mathcal{N}} [F(x_k, x_{k'}, \Delta d_k, \Delta d_{k'})] + \sum_k G_k(x_k, d_k). \qquad (5)$$

Where $\Delta d$ is the disparity gradient along epipolar lines, that is

$$\Delta d_k = d_k - d_{k-1}. \qquad (6)$$

Typically, F(...)discourages excessive disparity gradient within matched regions. Pixel pairs $(k, k') \in \mathcal{N}$ are the ones that are deemed to be neighbouring in the pixel grid. The first component $F(...)$of the prior Gibbs energy V in (5) should incorporate an Ising component that favours coherence in the segmentation variables $x_k, x_{k'}$. It should also favour continuity of disparity over matched regions, and do so anisotropically - more strongly along epipolar lines than across them. The $G_k(..)$term implements "disparity-pull", the tendency of foreground elements to have higher disparity than background ones. The specific form of $G_k(..)$can be set by taking

$$G_k(x_k, d_k) = -\log p(d_k \mid x_k). \qquad (7)$$

and determining the conditional density $p(d_k \mid x_k)$from the observed statistics of some labelled data. Various models could be used here, for example a simple, constant disparity, separating surface is used, so that $d > d_0$ characterizes foreground, with uniform distributions $p(d_k \mid x_k)$ over each of the possible states $x \in \{F,B,O\}$.

- Stereo likelihood: represented by the $U^M$ term, evaluates the stereo-match evidence in the data z, both to distinguish occlusion ($x_k = O$)from full visibility ($x_k \in \{F,B\}$) and, given visibility, to determine disparity $d_k$.
- Colour likelihood: represented by the $U^C$ term, uses probability densities in colour space, one density for the background and another for the foreground, to apply evidence from pixel colour to the segmentation $x_k$ of each pixel.

A further elaboration, incorporates the evidence from image contrast for segmentation. It proves important in refining segmentation quality, at the cost of obscuring somewhat the clear generative distinction between prior and likelihood. The Ising component F in (5) is made contrast dependent, disabling the penalty for breaking coherence in x wherever image contrast is high. Segmentation boundaries tend, as a result, to align with contours of high contrast. The MRF model (4) is extended in this way to a CRF

$$E(z, x, d; \theta) = V(z, x, d; \theta) + U^{M}(z, x, d; \theta) + U^{C}(z \mid x; \theta). \qquad (8)$$

in which dependence on data z is now incorporated in to the *V*(...)term.

The stated inference problem (3) for segmentation, is intractable with the Gibbs energy model (8) above. A related problem,

$$\dot{x} = \arg\max_{x} \left( \max_{d} p(x, d \mid z) \right), \qquad (9)$$

while not formally tractable, could be regarded as tractable in practice because it can be solved approximately by the α-expansion form of graph-cut, over the variables x,d jointly (provided the energy function E is chosen to meet the necessary regularity conditions). The approximation (9) to the original problem is likely to be a good one, because the posterior density is likely to be sharply peaked with respect to d , since stereo constraints on disparity are typically strong. However, α-expansion over (x,d) jointly would be rather inefficient, at least an order of magnitude below real-time, for current architectures.

Two approaches to simplifying the Gibbs energy model, to make inference of segmentation x practically tractable and efficient are described:

- LDP. In Layered Dynamic Programming, all vertical cliques in V (5) are removed, resulting in a posterior density consisting simply of a set of one-dimensional Hidden Markov Models (HMMs), one HMM along each epipolar line. For the disparity-gradient dependence in V , this means retaining the strong epipolar constraints, but omitting figural continuity constraints, which are weaker. For the segmentation coherence encouraged by V , constraints can be imposed only horizontally, and the vertical constraint is lost. Nonetheless there is some implicit transfer of information vertically via the overlap of the patches used in the stereo match likelihood (see below). In exchange for the lost vertical constraint, the max-max (9) form of the problem becomes exactly tractable by dynamic programming. Not only that, but because the prior energy V has become a Markov chain, the parameter learning problem also becomes tractable.

- LGC: In Layered Graph Cut, the prior term F(...)in (5) is made independent of disparity d. Now the posterior density can be marginalized exactly over d in the original inference problem (3). Marginalisation gives the posterior density *p*(x | z)for segmentation only, which can be maximized by ternary graph-cut, using α-expansion. Parameter learning has not been made tractable, but some guidance comes from priors and likelihoods estimated for LDP, transplanted (and simplified) to the LGC model.

In summary, two approximate models are described for the original problem. One, LDP, has the advantage of practical tractability not only for inference but also for parameter learning. It has the disadvantage though that vertical constraints have been neglected. On the other hand LGC retains vertical constraints at least for segmentation, but neglects all direct constraints on continuity of disparity. It has the advantage of solving the original max-sum form of the inference problem, rather than just the max-max approximation, but the disadvantage that parameter estimation remains intractable.

The stereo-matching energy $U^M(z,x,d;\theta)$ from (8) is modelled as a sum over pixels

$$U^M(z, x, d) = \sum_k U_k^M(z, x_k, d_k) \qquad (10)$$

where each $U_k^M$ is the cost associated with the stereo match at *pixel k* . Commonly stereo matches are scored using SSD (sum-squared difference), that is the L²-norm of difference between image patches $L_m^P, R_n^P$ , surrounding hypothetically matched pixels *m,n*. $U_k^M$ can be modelled in terms of SSD but with additive and multiplicative normalization for robustness to non-Lambertian effects and photometric calibration error. This is termed NSSD - normalized SSD:

$$U_k^M(z, x_k, d_k) = \begin{cases} M(L_m^P, R_n^P) & \text{if } x_k \in \{F, B\} \\ 0 & \text{if } x_k = O, \end{cases} \qquad (11)$$

where $M = \lambda(N - N_0)$ with λ, $N_0$ being constants, and $m,n = (k \pm d_k)/2$ the left and right image indices, as before (1). The NSSD N is:

$$N(L^{\mathrm{P}}, R^{\mathrm{P}}) = \frac{1}{2} \frac{\|(L^{\mathrm{P}} - \overline{L^{\mathrm{P}}}) - (R^{\mathrm{P}} - \overline{R^{\mathrm{P}}})\|^2}{\|L^{\mathrm{P}} - \overline{L^{\mathrm{P}}}\|^2 + \|R^{\mathrm{P}} - \overline{R^{\mathrm{P}}}\|^2} \in [0, 1],$$  (12)

in which $\overline{R^P}$ denotes the mean value over the patch $R^P$. The constant $N_o$ can be thought of as a penalty for failure to match.

Likelihoods for colour in foreground and background may be modelled using Gaussian mixtures in RGB colour space, learned from image frames, labelled (automatically), from earlier in the sequence. The foreground colour model $p^F(z)$ is simply a spatially global Gaussian mixture learned from foreground pixels, and similarly for the background model $p^B(z)$. The combined colour model is then given by an energy $U_k^C$:

$$U_k^C(z_k, x_k) = \qquad\qquad (13)$$
$$\begin{cases} -\log p^F(z_k) & \text{if } x_k = \mathrm{F} \\ -\log p^B(z_k) & \text{if } x_k = \mathrm{B} \text{ or } x = 0 \end{cases}$$

Learning of the global foreground and background colour models $p^F$ and $p^B$ proceeds as follows. Each is a mixture of $N_C = 20$ full covariance Gaussian components in RGB colour-space, and is learned, at each video timestep, using 20 iterations of EM, initialized from the mixture in the previous frame. The data is taken from the previous timestep, labelled as foreground/background from the output of the segmentation process. In the case of LGC, the algorithm will be defined with respect to one (the left) image only, so colour models are built from that one image. In the case of the LDP algorithm, models are maintained independently for each of the left and right images. The total energy for colour is taken as:

$$U^C(\mathbf{z}, \mathbf{x}; \theta) = \rho \sum_k U_k^C(z_k, x_k) \qquad (14)$$

where the colour discount constant $p$ (typical value $\rho = 1/2$) is included to tune the balance of influence between the stereo model and the colour model. In principle, the generative derivation of the energies should have balanced them already. In practice, the pixelwise independence assumptions built in to the colour model render the influence of colour excessively strong, and choosing a value $\rho < 1$ discounts for that. Colour models are initialized at time $t = 0$, by setting $\rho = 0$, estimating segmentation without using colour, and using the labelled segments to learn the foreground and background colour models for t = 0. Note that for working in the cyclopean frame, separate foreground and background colour models are maintained for each of the left and right images.

To implement the contrast dependence described above, a soft switch for the Ising penalty is defined, replacing $F(...)$ in (5) by

$$F(x_k, x_{k'}, \Delta d_k, \Delta d_{k'}, V_{k,k'}^*). \qquad (15)$$

where $V_{k,k'}^*$ is the soft contrast switch applying across sites $k,k'$:

$$V_{k,k'}^* = \frac{1}{1+\epsilon}\left(\epsilon + \exp -\frac{\|g_k - g_{k'}\|^2}{2\sigma^2 d_{k,k'}^2}\right). \qquad (16)$$

Here g is the image-data, Gaussian smoothed at a scale of 0.7 pixels and with components $g_k$ at each pixel; $d_{k,k'}$ is the Euclidean distance between pixels $k,k'$ and $\sigma^2 = (\|g_k - g_{k'}\|^2/d_{k,k'}^2)$, a mean contrast over all neighbouring pairs of image pixels. The factor $V_{k,k'}^*$ acts as a soft contrast switch, and is typically allowed to multiply certain of the costs in $F(...)$, so that built-in tendencies to coherence are abated in the presence of high contrast, as described below. The constant $\epsilon$ is a "dilution" constant for contrast, empirically found to be best set to $\epsilon = 1$.

To summarise, the final CRF model is as in (8) with

$$V(\mathrm{z,x,d};\theta) = \qquad\qquad\qquad\qquad (17)$$
$$\sum_{(k,k')\in\mathcal{V}} F(x_k, x_{k'}, \Delta d_k, \Delta d_{k'}, V^*_{k,k'}) + \sum_k G_k(x_k, d_k),$$

incorporating the contrast sensitivity, via $V^*$, as required.

As described above, different coordinate frames are used for the different models: cyclopean for LDP and left for LGC. The reason for this is that cyclopean is intrinsically preferable, not only for reasons of symmetry and elegance, but also because occlusions occur on both sides of a foreground object (not just one side, as with left image coordinates), and this gives additional constraint for segmenting the foreground. In LGC however, the cyclopean image is not accessible because marginalisation hides the disparities. Thus image contrast, for the contrast-sensitivity term, has to be computed from a physical image, e.g. the left.

The model used in LDP, as mentioned earlier, is the general stereo CRF model (8) with energy $E(z,x,d; \theta)$ from above, but with all vertical constraints removed. All optimization therefore takes place independently, within individual scanlines. In this one-dimensional situation, the Gibbs energy specification is equivalent to specifying a Hidden Markov Model (HMM) on (x,d) along each scanline. As usual for an HMM, the prior energy V (here also switched softly by contrast) is expressed as a Markov chain over $x_k, d_k$ given $x_{k-1}, d_{k-1}$. Observation likelihoods, $U^M$ for stereo and $U^C$ for colour, are expressed as emission costs, as is standard for an HMM.

Left pixels $L_m$ and right pixels $R_n$, on a given scanline of length $N_S$ pixels, are ordered by any particular matching path, giving 2N cyclopean pixels

$$z = \{z_k, \ k = 1, \ldots, 2N_S\},$$

where $k = m + n$. The $k$-axis is the so-called cyclopean coordinate axis. Conventionally in DP stereo matching the "ordering constraint" is imposed. Stereo disparity along the cyclopean epipolar line is

$$d = \{d_k, \ k = 1, \ldots, 2N_S - 1\} \text{ where } d_k = m - n.$$

Previous matching algorithms have allowed multiple and/or diagonal moves on the stereo matching paths. Here the problem differs significantly because in previous algorithms, diagonal moves are always matched, and horizontal/vertical ones are unmatched. However the nature of the stereo matching problem demands that horizontal/vertical moves should come both in matched and unmatched forms. (Matched horizontal/vertical moves are needed to represent the deviation of a visible surface from fronto-parallel). This raises a consistency requirement between matched move types: a path consisting of a sequence of diagonal moves is exactly equivalent to a corresponding path in which horizontal and vertical moves alternate strictly. The probabilities of the two paths should therefore be identical. This is most easily achieved simply by outlawing explicit, diagonal matched moves, forcing them to be expressed instead as a horizontal/vertical pair. This restriction ensures a consistent probabilistic interpretation of the sequence matching problem. Furthermore, the stepwise restrictions has the added virtue that each element $L_m$ and $R_n$ is "explained" once and only once. This is because a horizontal step visits a new $L_m$, which is thereby "explained" but stays with the old $R_n$. Conversely, a vertical step visits a new $R_n$. Thus each $L_m$ and each $R_n$ appears once and only once as a $z_k$ in a $p(z_k | ...)$ term, in the joint likelihood $\Pi_k p(z_k | x_k, d_k, z_1, ..., z_{k-1})$ for the scanline. This makes for a consistent definition of the likelihood.

The three possible states $x_k \in \{F, B, O\}$ are doubled up, for convenience, to reflect the existence of left and right variants, respectively the horizontal and vertical moves. This gives a total of 6 possible states: $x_k \in \{$L-match-F, R-match-F, L-match-B, R-match-B, L-occ, R-occ$\}$. The HMM for the Gibbs model is then reflected in a state-space diagram, which represents Markov chain transitions $k - 1 \rightarrow k$, in terms of costs (i.e. energy increments) on arcs, and these capture the contrast-modified prior energy V. Observation likelihood energies are represented by the costs $U^M_k$ and $U^C_k$ on nodes. Note that left-occluding and right-occluding states cannot directly intercommunicate, reflecting constraints of stereo geometry.

Transition energies between occluding and foreground states represent the component $F(...)$ of the prior energy V (17), and incorporate the soft contrast switch $V^*$ defined earlier (16). (In this cyclopean setting, $V^*$ must be computed from contrast in the left or the right image, according to whether the state is left-foreground or right-foreground.)

The model has a number of parameters $\{a_F, a_B, a_O, b_F, b_B, b_O, c_F, c_B\}$. It might seem problematic that so many parameters need to be set, but in fact they can be learned from labelled training frames as follows:

$$b_O = \log(2W_O) \quad b_F = \log(W_F) \quad b_B = \log(W_B) \qquad (18)$$

where $W_O$, $W_F$ and $W_B$ are the mean widths of occluded, foreground and background regions respectively. This follows simply from the fact that $2_{exp}$ -$b_0$ is the probability of escape from an occluded state, and so on. Then consideration of viewing geometry together with an assumption about typical slopes of visible surfaces indicates that:

$$a_F = \log(1 + D/B) - \log(1 - 1/W_F), \qquad (19)$$

where $D$ is a nominal distance to objects in the scene *and B* is the interocular distance (camera baseline), and similarly for $a^B$. Lastly, probabilistic normalisation demands that

$$a_O = -\log(1 - 2e^{-b_O}), \qquad (20)$$

and that

$$c_F = -\log(1 - e^{-b_F} - e^{-a_F}) \qquad (21)$$

and similarly for $c_B$, and so all the parameters are fixed.

The disparity-pull term $G_k(...)$ in the prior (17) is implemented in the transition-diagram as a cost applied at each node.

Likelihood costs for stereo and for colour are $U_k^M$ and $U_k^C$, as described earlier. They appear as nodal costs on the state transition diagram.

The 6-state HMM can be optimized straightforwardly by dynamic programming and this gives a solution to the alternative "max-max" estimation problem (9) described at the end of above.

Layered Graph Cut (LGC) determines segmentation x as the minimum of an energy function $E(z, x; \theta)$, in which stereo disparity d does not appear explicitly. The energy function is defined from the CRF (8) for the full stereo problem, by marginalising over disparity, to give a posterior distribution $p(x \mid z)$. Segmentation becomes a ternary optimization problem, over the three labels O, F, B on the x -values at each pixel, which can be solved (approximately) by iterative application of a binary graph-cut algorithm - so-called $\alpha$-expansion.

As explained earlier, LGC is expressed in the coordinate frame of one (e.g. left) image, rather than in the cyclopean frame as in LDP. Hence image related variables such as $x_m$ carry the left image index $m$, rather than the cyclopean $k$ used earlier.

In order for the marginalisation to be tractable, the energy $V$ (17) is simplified by neglecting explicit disparity dependence in $F(...)$, that is assuming that:

$$F(x_m, x_{m'}, \Delta d_m, \Delta d_{m'}, V_{m,m'}^z) = F(x_m, x_{m'}, V_{m,m'}^z). \qquad (22)$$

Now the marginalised posterior is defined by its energy

$$E(z, x; \theta) = V(z, x; \theta) + H(z, x, \theta) + U^C(z, x; \theta), \qquad (23)$$

where

$$V(z, x; \theta) = \sum_{(m,m') \in V} F(x_m, x_{m'}, V_{m,m'}^z) \qquad (24)$$

is derived from a simplified prior, with added soft contrast switching as earlier (1 5). The colour likelihood $U^C$ is unchanged from the earlier discussion, except now referred entirely to the left image. Finally the new term $H$ in (23) is a sum over pixels:

$$H(\mathbf{z}, \mathbf{x}) = \sum_m H_m(x_m) \qquad (25)$$

where $H_m$ is defined by marginalisation over disparity to be:

$$H_m(x_m) = \qquad (26)$$
$$-\log\left[\sum_{d_m} \exp - \{G_m(x_m, d_m) + U_m^{M}(z, x_m, d_m)\}\right].$$

Note that, from (7) and (11), this definition has the property that $H_m$ is normalised such that $H_m(O) = 0$.

The coherence/contrast costs (24) for the LGC model are defined to be

$$F(x_m, x_{m'}, V^*_{m,m'}) = F_{m,m'} V^*_{m,m'} \qquad (27)$$

where again $V^*_{m,m'}$ is the soft contrast switch. Anisotropic coherence costs $F_{m,m'}$ are defined as follows. Cliques consist of horizontal, vertical and diagonal neighbours on the square grid of pixels. For vertical and diagonal cliques $F_{m,m'}$ acts as a switch triggered by transitions in or out of the foreground state: $F_{m,m}[x,x'] = \gamma$ **if exactly** one variable equals F, and $F_{m,m}[x,x'] = 0$ otherwise. Horizontal cliques, along epipolar lines, inherit the same cost structure, except that certain transitions are disallowed on geometric (epipolar) grounds. These constraints are imposed via infinite cost penalties:

$$F_{m,m'}[x = F, x' = O] = \infty; \quad F_{m,m'}[x = O, x' = B] = \infty.$$

The constant $\gamma$ is broadly related to $b_F$ and $b_O$ in the LDP model, so a reasonable working for $\gamma$ is

$$\gamma = \frac{1}{2}(b_F + b_O) = \log(2\sqrt{W_F W_O}). \qquad (28)$$

where width parameters $W_F$ and $W_O$ were defined above (18).

Currently, graph cut based stereo algorithms techniques are not suited for real-time implementation. The main reason is that they perform $O(d_{max})$ $\alpha$-expansion operations (binary graph cuts), where $d_{max}$ is the number of possible disparities. Having marginalised over disparities, just three labels are left which is a substantial saving. In addition, the ternary expansion move algorithm can be implemented practically at a cost of a single graph computation by taking advantage of the structure of our problem.

Results after one iteration of the expansion move algorithm are very close to the results achieved at convergence. This is not surprising considering that the number of labels is small. Therefore, only one iteration, involving two graph cut computations, is needed. The segmentation is initialised with $x_m = B$ for all pixels and then F-expansion is run. Second, in the O-expansion operation it suffices to add nodes only for a small fraction of all pixels. Indeed, due to the geometric constraints O-expansion cannot change pixels in scanlines that do not contain B-F type transitions. Furthermore, it happens that the segmentation boundary found after F-expansion normally lies in the real occluded region located to the left of foreground object. Therefore, it is reasonable to perform O-expansion operation only for pixels within distance $d_{max}$ from B-F transitions.

In an example, the prior parameters for LDP are set as equations (18) and (19), with the same values for foreground and background parameters, i.e. $a_F$ and $a_B$ etc. Region widths in equations (19) and (18) are set to $W_O = 10$ pixels and $W_F = W_B = 100$ pixels, and typical values for object distance and baseline are $D = 1000$mm and $B = 50$mm. For LGC, Parameters $N_o$, $\gamma$, $\rho$ and c are varied, one at a time, around their default values $N_o = 0.35$, $\gamma = 2$, $\rho = 0.5$ and $\epsilon = 1$.

- Likelihood offset parameter $N_o$, gives low error rates over a range $0.25 \le N_o \le 0.35$. Note that $N_o = 0.25$ is the value obtained generatively, i.e. from likelihood fitting described above. The value $N_o = 0.35$ is very slightly superior discriminatively i.e. it gives lower error rate.
- Coherence constant $\gamma$ for LGC defined above, gives low error rates for $2 \le \gamma \le 4$. Notably this is far smaller than the

optimal value $\gamma \approx 25$ for segmentation using colour/contrast only. Presumably the presence of the additional cue from stereo to some extent takes over the role of coherence. The default value, from equation (28), and taking $W_O$ = 10 pixels and $W_M$ = 100 pixels as before, gives $\gamma$ = 3.8.

- Colour discount constant *p,* defined in equation (14), gives best error rates around $\rho$ =0.5. Without a discount ($\rho$ = 1) error rates are appreciably higher, and this confirms the need for a discount to modify the generative assumption of independence of colour at neighbouring pixels.
- Contrast parameter $\epsilon$, defined in equation (16) to impose figural continuity, has a mild effect on error rate performance. Our default $\epsilon$ = 1 performs a little better than either removing the contrast term altogether ($\epsilon = \infty$), or setting it at full strength ($\epsilon$ =0).

In all four cases, error rate performance is seen to be quite robust as parameters vary around their default values.

As described above, either of the algorithms (LGC or LDP) described above are capable of fusing the two kinds of information (stereo and colour/contrast), together with a coherence prior, with a substantial consequent improvement in segmentation accuracy. Fusion of stereo with colour and contrast can be captured in a probabilistic model, in which parameters can mostly be learned, or are otherwise stable. Fusion of stereo with colour and contrast makes for more powerful segmentation than for stereo or colour/contrast alone. Good quality segmentation of temporal sequences (stereo) can be achieved, without imposing any explicit temporal consistency between neighbouring frames. Temporal artefacts in stereo can be alleviated by explicit temporal modelling and inference, but currently this is too expensive computationally for a real time system.

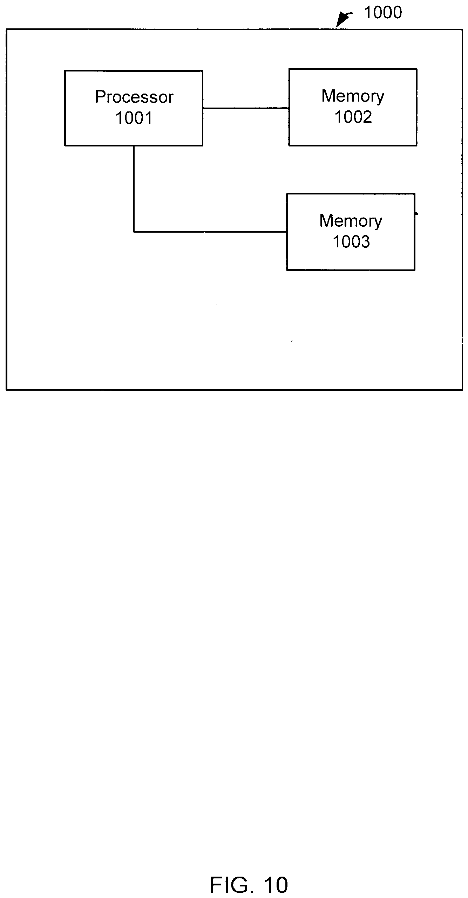

The image segmentation, as described above, may be performed using an apparatus 1000, as shown in FIG. 10, comprising a processor 1001 and a memory 1002 arranged to store executable instructions which, when executed, cause the processor to perform any or all of the method steps of any of the methods described above. The apparatus may also comprise a second memory 1003 for storage of the sequence of images and the resultant image segmentation information. Alternatively, all the data may be stored in a single memory or distributed across multiple memory elements.

Although the present examples are described and illustrated herein as being implemented in an apparatus as described above, the system described is provided as an example and not a limitation. As those skilled in the art will appreciate, the present examples are suitable for application in a variety of different types of processing systems.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices

Any range or device value given herein may be extended or altered without losing the effect sought, as will be apparent to the skilled person.

The steps of the methods described herein may be carried out in any suitable order, or simultaneously where appropriate. It will be appreciated that where methods show steps being repeated, the manner in which they are shown to repeat is by way of example only, and alternative loop back configurations may alternatively be used.

It will be understood that the above description of a preferred embodiment is given by way of example only and that various modifications may be made by those skilled in the art. The above specification, examples and data provide a complete description of the structure and use of exemplary embodiments of the invention.

**Claims**

1. A method of stereo image segmentation comprising:

   computing a stereo likelihood for each pixel in a first pair of stereo images in a sequence of pairs of stereo images (202); and
   performing image segmentation on the first pair of stereo images based on the computed stereo likelihood for each pixel (101, 203);
   and **characterised in that** the method further comprises:

selecting an image from a second pair of stereo images in the sequence and determining based on an image from an immediately preceding pair of stereo images, for each pixel, if a change has occurred (102, 204) using an algorithm including one or more motion likelihoods for each pixel;
for each pixel where a change has occurred, computing a stereo likelihood for the pixel in the second pair of stereo images (205);
for each pixel where a change has not occurred, identifying a stereo likelihood for the pixel equal to the value of the stereo likelihood for the pixel in the immediately preceding pair of stereo images (206); and
performing image segmentation on the second pair of stereo images based on the computed stereo likelihood for each pixel where a change has occurred and based on the identified stereo likelihood for each pixel where a change has not occurred (103, 208).

2. A method according to claim 1, further comprising:

selecting an image from a third pair of stereo images in the sequence and determining based on an image from an immediately preceding pair of stereo images, for each pixel, if a change has occurred using an algorithm including one or more motion likelihoods for each pixel;
for each pixel where a change has occurred, computing a stereo likelihood for the pixel in the third pair of stereo images;
for each pixel where a change has not occurred, identifying a stereo likelihood for the pixel equal to the value of the stereo likelihood for the pixel in the immediately preceding pair of stereo images;
performing image segmentation on the third pair of stereo images based on the computed stereo likelihood for each pixel where a change has occurred and based on the identified stereo likelihood for each pixel where a change has not occurred; and
repeating the selecting, computing, identifying and performing steps for a next pair of stereo images in the sequence.

3. A method according to claim 1 or 2, further comprising:

computing a second likelihood for each pixel in the first pair of stereo images in the sequence, wherein image segmentation on the first pair of stereo images is based on both the computed stereo and second likelihoods for each pixel;
for each pixel in the second pair of stereo images where a change has occurred, computing a second likelihood for the pixel in the second pair of stereo images;
for each pixel in the second pair of stereo images where a change has not occurred, identifying a second likelihood for the pixel equal to the value of the second likelihood for the pixel in the immediately preceding pair of stereo images; and wherein performing image segmentation on the second pair of stereo images is based on the computed stereo and second likelihoods for each pixel where a change has occurred and based on the identified stereo and second likelihoods for each pixel where a change has not occurred.

4. A method according to claim 3, wherein the method further comprises, prior to performing image segmentation on the second pair of images:

selecting an image from the second pair of stereo images in the sequence and determining a texture parameter associated with each pixel; and
wherein for each pixel where the texture parameter does not exceed a predefined threshold, performing image segmentation on the second pair of stereo images is: based on the computed second likelihood for each pixel where a change has occurred; and based on the identified second likelihood for each pixel where a change has not occurred.

5. A method according to claim 1 or 2, further comprising:

computing a second likelihood for each pixel in the first pair of stereo images in the sequence (201), wherein image segmentation on the first pair of stereo images is based on both the computed stereo and second likelihoods for each pixel;
for each pixel in the second pair of stereo images, computing a second likelihood for the pixel in the second pair of stereo images (207);
and wherein performing image segmentation on the second pair of stereo images is based on the computed stereo and second likelihoods for each pixel where a change has occurred and based on the identified stereo likelihood and computed second likelihood for each pixel where a change has not occurred.

6. A method according to claim 5, wherein the method further comprises, prior to performing image segmentation on the second pair of stereo images:

   selecting an image from the second pair of stereo images in the sequence and determining a texture parameter associated with each pixel; and
   wherein for each pixel where the texture parameter does not exceed a predefined threshold, performing image segmentation on the second pair of stereo images is based on the computed second likelihood for each pixel.

7. A method according to claim 4 or 6, wherein determining a texture parameter associated with each pixel comprises:

   for each pixel where a change has occurred, computing a texture parameter associated with the pixel; and
   for each pixel where a change has not occurred, identifying a texture parameter for the pixel equal to the value of the texture parameter for the pixel in the immediately preceding pair of stereo images.

8. A method according to any of the preceding claims wherein the second likelihood comprises a contrast / colour likelihood.

9. A method according to any of claims 3-7 or claim 8 when dependent upon any of claims 3-7, wherein determining based on an image from the immediately preceding pair of stereo images, for each pixel, if a change has occurred using an algorithm including one or more motion likelihoods for each pixel comprises:

   computing a motion likelihood for each pixel; and
   determining if change is detected using the motion likelihood and a change detection algorithm.

10. A method according to claim 9, wherein the motion likelihood comprises a function of one of: contrast and a rate of change of intensity.

11. A method according to any of claims 1-8, wherein determining based on an image from the immediately preceding pair of stereo images, for each pixel, if a change has occurred using an algorithm including one or more motion likelihoods for each pixel comprises:

   computing a first motion likelihood and a second motion likelihood for each pixel, wherein the first motion likelihood is associated with a first segmentation precondition and the second motion likelihood is associated with a second segmentation precondition; and
   determining if change is detected using the first and second motion likelihoods and a change detection algorithm.

12. A method according to claim 10 or 1 1, wherein the change detection algorithm is based on data from a test sequence of pairs of stereo images.

13. A method according to any of the preceding claims, further comprising:

   prior to computing a stereo likelihood for each pixel in the first pair of stereo images in the sequence, filtering the first pair of stereo images to reduce noise; and
   prior to determining based on an image from the immediately preceding pair of stereo images, for each pixel in the selected image from the second pair of stereo images, if a change has occurred, filtering the second pair of stereo images to reduce noise.

14. A method according to claim 13, wherein a Gaussian filter is used to filter each image to reduce noise.

15. A method according to any of the preceding claims, wherein the images comprise rectified images.

16. A computer program comprising computer program code means adapted to perform all the steps of any of the preceding claims when said program is run on a computer.

17. A computer program as claimed in claim 16 embodied on a computer readable medium.

**18.** An apparatus (1000) comprising:

a processor (1001);
a memory (1002) arranged to store executable instructions arranged to cause the processor to:

compute a stereo likelihood for each pixel in a first pair of stereo images in a sequence of pairs of stereo images; and
perform image segmentation on the first pair of stereo images based on the computed stereo likelihood for each pixel;

and **characterised in that** the memory is further arranged to store executable instructions arranged to cause the processor to:

select an image from a second pair of stereo images in the sequence and determine based on an image from an immediately preceding pair of stereo images, for each pixel, if a change has occurred using an algorithm including one or more motion likelihoods for each pixel;
for each pixel where a change has occurred, compute a stereo likelihood for the pixel in the second pair of stereo images;
for each pixel where a change has not occurred, identify a stereo likelihood for the pixel equal to the value of the first likelihood for the pixel in the immediately preceding pair of stereo images; and
perform image segmentation on the second pair of stereo images based on the computed stereo likelihood for each pixel where a change has occurred and based on the identified stereo likelihood for each pixel where a change has not occurred.

**Patentansprüche**

**1.** Verfahren zur Stereobildsegmentierung, umfassend:

Errechnen einer Stereowahrscheinlichkeit für jedes Pixel in einem ersten Paar von Stereobildern in einer Abfolge von Paaren von Stereobildern (202); und
Ausführen einer Bildsegmentierung an dem ersten Paar von Stereobildern basierend auf der errechneten Stereowahrscheinlichkeit für jedes Pixel (101, 203);
und **dadurch gekennzeichnet, dass** das Verfahren weiter umfasst:

Auswählen eines Bilds aus einem zweiten Paar von Stereobildern in der Abfolge und Bestimmen, basierend auf einem Bild aus einem unmittelbar vorausgehenden Paar von Stereobildern, für jedes Pixel, ob eine Änderung aufgetreten ist (102, 204) unter Verwendung eines Algorithmus, der eine oder mehrere Bewegungswahrscheinlichkeiten für jedes Pixel enthält;
für jedes Pixel, wo eine Änderung aufgetreten ist, Errechnen einer Stereowahrscheinlichkeit für das Pixel in dem zweiten Paar von Stereobildern (205);
für jedes Pixel, wo keine Änderung aufgetreten ist, Identifizieren einer Stereowahrscheinlichkeit für das Pixel gleich dem Wert der Stereowahrscheinlichkeit für das Pixel in dem unmittelbar vorausgehenden Paar von Stereobildern (206); und
Ausführen einer Bildsegmentierung an dem zweiten Paar von Stereobildern, basierend auf der errechneten Stereowahrscheinlichkeit für jedes Pixel, wo eine Änderung aufgetreten ist, und basierend auf der identifizierten Stereowahrscheinlichkeit für jedes Pixel, wo keine Änderung aufgetreten ist (103, 208).

**2.** Verfahren nach Anspruch 1, ferner umfassend:

Auswählen eines Bilds aus einem dritten Paar von Stereobildern in der Abfolge und Bestimmen, basierend auf einem Bild aus einem unmittelbar vorausgehenden Paar von Stereobildern, für jedes Pixel, ob eine Änderung aufgetreten ist, unter Verwendung eines Algorithmus, der eine oder mehrere Bewegungswahrscheinlichkeiten für jedes Pixel enthält;
für jedes Pixel, wo eine Änderung aufgetreten ist, Errechnen einer Stereowahrscheinlichkeit für das Pixel in dem dritten Paar von Stereobildern;
für jedes Pixel, wo keine Änderung aufgetreten ist, Identifizieren einer Stereowahrscheinlichkeit für das Pixel gleich dem Wert der Stereowahrscheinlichkeit für das Pixel in dem unmittelbar vorausgehenden Paar von Stereobildern;

Ausführen einer Bildsegmentierung an dem dritten Paar von Stereobildern, basierend auf der errechneten Stereowahrscheinlichkeit für jedes Pixel, wo eine Änderung aufgetreten ist und basierend auf der identifizierten Stereowahrscheinlichkeit für jedes Pixel, wo keine Änderung aufgetreten ist; und

Wiederholen der Schritte des Auswählens, Errechnens, Identifizierens und Ausführens für ein nächstes Paar von Stereobildern in der Abfolge.

3.  Verfahren nach Anspruch 1 oder 2, ferner umfassend:

Errechnen einer zweiten Wahrscheinlichkeit für jedes Pixel in dem ersten Paar von Stereobildern in der Abfolge, wobei eine Bildsegmentierung an dem ersten Paar von Stereobildern auf der errechneten Stereo- und zweiten Wahrscheinlichkeit für jedes Pixel basiert;

für jedes Pixel in dem zweiten Paar von Stereobildern, wo eine Änderung aufgetreten ist, Errechnen einer zweiten Wahrscheinlichkeit für das Pixel in dem zweiten Paar von Stereobildern;

für jedes Pixel in dem zweiten Paar von Stereobildern, wo keine Änderung aufgetreten ist, Identifizieren einer zweiten Wahrscheinlichkeit für das Pixel gleich dem Wert der zweiten Wahrscheinlichkeit für das Pixel in dem unmittelbar vorausgehenden Paar von Stereobildern; und wobei ein Ausführen einer Bildsegmentierung an dem zweiten Paar von Stereobildern auf der errechneten Stereo- und zweiten Wahrscheinlichkeit für jedes Pixel basiert, wo eine Änderung aufgetreten ist, und auf der identifizierten Stereo- und zweiten Wahrscheinlichkeit für jedes Pixel basiert, wo keine Änderung aufgetreten ist.

4.  Verfahren nach Anspruch 3, wobei das Verfahren vor Ausführen einer Bildsegmentierung an dem zweiten Paar von Bildern ferner umfasst:

Auswählen eines Bilds aus dem zweiten Paar von Stereobildern in der Abfolge und Bestimmen eines Texturparameters, der mit jedem Pixel verknüpft ist; und

wobei für jedes Pixel, wo der Texturparameter nicht einen vordefinierten Schwellenwert überschreitet, ein Ausführen einer Bildsegmentierung an dem zweiten Paar von Stereobildern wie folgt ist: basierend auf der errechneten zweiten Wahrscheinlichkeit für jedes Pixel, wo eine Änderung aufgetreten ist; und

basierend auf der identifizierten zweiten Wahrscheinlichkeit für jedes Pixel, wo keine Änderung aufgetreten ist.

5.  Verfahren nach Anspruch 1 oder 2, ferner umfassend:

Errechnen einer zweiten Wahrscheinlichkeit für jedes Pixel in dem ersten Paar von Stereobildern in der Abfolge (201), wobei eine Bildsegmentierung an dem ersten Paar von Stereobildern auf der errechneten Stereo- und zweiten Wahrscheinlichkeit für jedes Pixel basiert;

für jedes Pixel in dem zweiten Paar von Stereobildern, Errechnen einer zweiten Wahrscheinlichkeit für das Pixel in dem zweiten Paar von Stereobildern (207);

und wobei ein Ausführen einer Bildsegmentierung an dem zweiten Paar von Stereobildern auf der errechneten Stereo- und zweiten Wahrscheinlichkeit für jedes Pixel basiert, wo eine Änderung aufgetreten ist, und auf der identifizierten Stereowahrscheinlichkeit und errechneten zweiten Wahrscheinlichkeit für jedes Pixel basiert, wo keine Änderung aufgetreten ist.

6.  Verfahren nach Anspruch 5, wobei das Verfahren vor Ausführen einer Bildsegmentierung an dem zweiten Paar von Stereobildern ferner umfasst:

Auswählen eines Bilds aus dem zweiten Paar von Stereobildern in der Abfolge und Bestimmen eines Texturparameters, der mit jedem Pixel verknüpft ist; und

wobei für jedes Pixel, wo der Texturparameter nicht einen vordefinierten Schwellenwert überschreitet, ein Ausführen einer Bildsegmentierung an dem zweiten Paar von Stereobildern auf der errechneten zweiten Wahrscheinlichkeit für jedes Pixel basiert.

7.  Verfahren nach Anspruch 4 oder 6, wobei ein Bestimmen eines Texturparameters, der mit jedem Pixel verknüpft ist, umfasst:

für jedes Pixel, wo eine Änderung aufgetreten ist, Errechnen eines Texturparameters, der mit dem Pixel verknüpft ist; und

für jedes Pixel, wo keine Änderung aufgetreten ist, Identifizieren eines Texturparameters für das Pixel gleich dem Wert des Texturparameters für das Pixel in dem unmittelbar vorausgehenden Paar von Stereobildern.

8. Verfahren nach einem der vorherigen Ansprüche, wobei die zweite Wahrscheinlichkeit eine Kontrast- / Farbwahrscheinlichkeit umfasst.

9. Verfahren nach einem der Ansprüche 3-7 oder Anspruch 8, wenn abhängig von einem der Ansprüche 3-7, wobei ein Bestimmen, basierend auf einem Bild aus dem unmittelbar vorausgehenden Paar von Stereobildern, für jedes Pixel, ob eine Änderung aufgetreten ist, unter Verwendung eines Algorithmus, der eine oder mehrere Bewegungswahrscheinlichkeiten für jedes Pixel enthält, umfasst:

Errechnen einer Bewegungswahrscheinlichkeit für jedes Pixel; und
Bestimmen, ob eine Änderung festgestellt wird, unter Verwendung der Bewegungswahrscheinlichkeit und eines Änderungserkennungsalgorithmus.

10. Verfahren nach Anspruch 9, wobei die Bewegungswahrscheinlichkeit eine Funktion eines des Folgenden umfasst: Kontrast und eine Intensitätsänderungsrate.

11. Verfahren nach einem der Ansprüche 1-8, wobei ein Bestimmen, basierend auf einem Bild aus dem unmittelbar vorausgehenden Paar von Stereobildern, für jedes Pixel, ob eine Änderung aufgetreten ist, unter Verwendung eines Algorithmus, der eine oder mehrere Bewegungswahrscheinlichkeiten für jedes Pixel enthält, umfasst:

Errechnen einer ersten Bewegungswahrscheinlichkeit und einer zweiten Bewegungswahrscheinlichkeit für jedes Pixel, wobei die erste Bewegungswahrscheinlichkeit mit einer ersten Segmentierungsvorbedingung verknüpft ist und die zweite Bewegungswahrscheinlichkeit mit einer zweiten Segmentierungsvorbedingung verknüpft ist; und
Bestimmen, ob eine Änderung festgestellt wird, unter Verwendung der ersten und zweiten Bewegungswahrscheinlichkeiten und eines Änderungserkennungsalgorithmus.

12. Verfahren nach Anspruch 10 oder 11, wobei der Änderungserkennungsalgorithmus auf Daten aus einer Testabfolge von Paaren von Stereobildern basiert.

13. Verfahren nach einem der vorherigen Ansprüche, ferner umfassend:

vor Errechnen einer Stereowahrscheinlichkeit für jedes Pixel in dem ersten Paar von Stereobildern in der Abfolge, ein Filtern des ersten Paars von Stereobildern, um ein Rauschen zu reduzieren; und
vor einem Bestimmen basierend auf einem Bild aus dem unmittelbar vorausgehenden Paar von Stereobildern, für jedes Pixel im ausgewählten Bild aus dem zweiten Paar von Stereobildern, ob eine Änderung aufgetreten ist, ein Filtern des zweiten Paars von Stereobildern, um ein Rauschen zu reduzieren.

14. Verfahren nach Anspruch 13, wobei ein Gauß-Filter verwendet wird, um jedes Bild zu filtern, um ein Rauschen zu reduzieren.

15. Verfahren nach einem der vorherigen Ansprüche, wobei die Bilder rektifizierte Bilder umfassen.

16. Computerprogramm, das Computerprogrammcode-Mittel umfasst, die angepasst sind, um alle Schritte nach einem der vorherigen Ansprüche auszuführen, wenn das Programm auf einem Computer ausgeführt wird.

17. Computerprogramm nach Anspruch 16, eingebettet in ein computerlesbares Medium.

18. Gerät (1000), umfassend:

einen Prozessor (1001);
einen Speicher (1002), der angeordnet ist, um ausführbare Anweisungen zu speichern, die angeordnet sind, um den Prozessor zu Folgendem zu veranlassen:

Errechnen einer Stereowahrscheinlichkeit für jedes Pixel in einem ersten Paar von Stereobildern in einer Abfolge von Paaren von Stereobildern; und
Ausführen einer Bildsegmentierung an dem ersten Paar von Stereobildern, basierend auf der errechneten Stereowahrscheinlichkeit für jedes Pixel;
und **dadurch gekennzeichnet, dass** der Speicher ferner angeordnet ist, um ausführbare Anweisungen zu speichern, die angeordnet sind, um den Prozessor zu Folgendem zu veranlassen:

Auswählen eines Bilds aus einem zweiten Paar von Stereobildern in der Abfolge und Bestimmen, basierend auf einem Bild aus einem direkt vorherigen Paar von Stereobildern, für jedes Pixel, ob eine Änderung aufgetreten ist, unter Verwendung eines Algorithmus, der eine oder mehrere Bewegungswahrscheinlichkeiten für jedes Pixel enthält;

für jedes Pixel, wo eine Änderung aufgetreten ist, Errechnen einer Stereowahrscheinlichkeit für das Pixel in dem zweiten Paar von Stereobildern;

für jedes Pixel, wo keine Änderung aufgetreten ist, Identifizieren einer Stereowahrscheinlichkeit für das Pixel gleich dem Wert der ersten Wahrscheinlichkeit für das Pixel in dem unmittelbar vorausgehenden Paar von Stereobildern; und

Ausführen einer Bildsegmentierung an dem zweiten Paar von Stereobildern, basierend auf der errechneten Stereowahrscheinlichkeit für jedes Pixel, wo eine Änderung aufgetreten ist, und basierend auf der identifizierten Stereowahrscheinlichkeit für jedes Pixel, wo keine Änderung aufgetreten ist.

**Revendications**

1. Procédé de segmentation d'images stéréoscopiques comprenant :

le calcul d'une vraisemblance stéréoscopique pour chaque pixel dans une première paire d'images stéréoscopiques dans une séquence de paires d'images stéréoscopiques (202) ; et
la réalisation d'une segmentation d'images sur la première paire d'images stéréoscopiques sur la base de la vraisemblance stéréoscopique calculée pour chaque pixel (101, 203) ;
et **caractérisé en ce que** le procédé comprend en outre :

la sélection d'une image parmi une deuxième paire d'images stéréoscopiques dans la séquence et le fait de déterminer sur la base d'une image parmi une paire d'images stéréoscopiques immédiatement précédente, pour chaque pixel, si un changement est survenu (102, 204) à l'aide d'un algorithme incluant une ou plusieurs vraisemblances de mouvement pour chaque pixel ;
pour chaque pixel où un changement est survenu, le calcul d'une vraisemblance stéréoscopique pour le pixel dans la deuxième paire d'images stéréoscopiques (205) ;
pour chaque pixel où un changement n'est pas survenu, l'identification d'une vraisemblance stéréoscopique pour le pixel égale à la valeur de la vraisemblance stéréoscopique pour le pixel dans la paire d'images stéréoscopiques immédiatement précédente (206) ; et
la réalisation d'une segmentation d'images sur la deuxième paire d'images stéréoscopiques sur la base de la vraisemblance stéréoscopique calculée pour chaque pixel où un changement est survenu et sur la base de la vraisemblance stéréoscopique identifiée pour chaque pixel où un changement n'est pas survenu (103, 208).

2. Procédé selon la revendication 1, comprenant en outre :

la sélection d'une image parmi une troisième paire d'images stéréoscopiques dans la séquence et le fait de déterminer sur la base d'une image parmi une paire d'images stéréoscopiques immédiatement précédente, pour chaque pixel, si un changement est survenu à l'aide d'un algorithme incluant une ou plusieurs vraisemblances de mouvement pour chaque pixel ;
pour chaque pixel où un changement est survenu, le calcul d'une vraisemblance stéréoscopique pour le pixel dans la troisième paire d'images stéréoscopiques ;
pour chaque pixel où un changement n'est pas survenu, l'identification d'une vraisemblance stéréoscopique pour le pixel égale à la valeur de la vraisemblance stéréoscopique pour le pixel dans la paire d'images stéréoscopiques immédiatement précédente ;
la réalisation d'une segmentation d'images sur la troisième paire d'images stéréoscopiques sur la base de la vraisemblance stéréoscopique calculée pour chaque pixel où un changement est survenu et sur la base de la vraisemblance stéréoscopique identifiée pour chaque pixel où un changement n'est pas survenu ; et
la répétition des étapes de sélection, de calcul, d'identification et de réalisation pour une paire d'images stéréoscopiques suivante dans la séquence.

**3.** Procédé selon la revendication 1 ou 2, comprenant en outre :

le calcul d'une seconde vraisemblance pour chaque pixel dans la première paire d'images stéréoscopiques dans la séquence, dans lequel la segmentation d'images sur la première paire d'images stéréoscopiques est basée à la fois sur la vraisemblance stéréoscopique calculée et sur la seconde vraisemblance calculée pour chaque pixel ;
pour chaque pixel dans la deuxième paire d'images stéréoscopiques où un changement est survenu, le calcul d'une seconde vraisemblance pour le pixel dans la deuxième paire d'images stéréoscopiques ;
pour chaque pixel dans la deuxième paire d'images stéréoscopiques où un changement n'est pas survenu, l'identification d'une seconde vraisemblance pour le pixel égale à la valeur de la seconde vraisemblance pour le pixel dans la paire d'images stéréoscopiques immédiatement précédente ; et dans lequel la réalisation d'une segmentation d'images sur la deuxième paire d'images stéréoscopiques est basée sur la vraisemblance stéréoscopique calculée et sur la seconde vraisemblance calculée pour chaque pixel où un changement est survenu et basée sur la vraisemblance stéréoscopique identifiée et sur la seconde vraisemblance identifiée pour chaque pixel où un changement n'est pas survenu.

**4.** Procédé selon la revendication 3, dans lequel le procédé comprend en outre, avant la réalisation d'une segmentation d'images sur la deuxième paire d'images :

la sélection d'une image parmi la deuxième paire d'images stéréoscopiques dans la séquence et la détermination d'un paramètre de texture associé à chaque pixel ; et
dans lequel pour chaque pixel où le paramètre de texture n'excède pas un seuil prédéfini, la réalisation d'une segmentation d'images sur la deuxième paire d'images stéréoscopiques est basée sur la seconde vraisemblance calculée pour chaque pixel où un changement est survenu ; et basée sur la seconde vraisemblance identifiée pour chaque pixel où un changement n'est pas survenu.

**5.** Procédé selon la revendication 1 ou 2, comprenant en outre :

le calcul d'une seconde vraisemblance pour chaque pixel dans la première paire d'images stéréoscopiques dans la séquence (201), dans lequel la segmentation d'images sur la première paire d'images stéréoscopiques est basée à la fois sur la vraisemblance stéréoscopique calculée et sur la seconde vraisemblance calculée pour chaque pixel ;
pour chaque pixel dans la deuxième paire d'images stéréoscopiques, le calcul d'une seconde vraisemblance pour le pixel dans la deuxième paire d'images stéréoscopiques (207) ;
et dans lequel la réalisation d'une segmentation d'images sur la deuxième paire d'images stéréoscopiques est basée sur la vraisemblance stéréoscopique calculée et sur la seconde vraisemblance calculée pour chaque pixel où un changement est survenu et basée sur la vraisemblance stéréoscopique identifiée et sur la seconde vraisemblance calculée pour chaque pixel où un changement n'est pas survenu.

**6.** Procédé selon la revendication 5, dans lequel le procédé comprend en outre, avant la réalisation d'une segmentation d'images sur la deuxième paire d'images stéréoscopiques :

la sélection d'une image parmi la deuxième paire d'images stéréoscopiques dans la séquence et la détermination d'un paramètre de texture associé à chaque pixel ; et
dans lequel pour chaque pixel où le paramètre de texture n'excède pas un seuil prédéfini, la réalisation d'une segmentation d'images sur la deuxième paire d'images stéréoscopiques est basée sur la seconde vraisemblance calculée pour chaque pixel.

**7.** Procédé selon la revendication 4 ou 6, dans lequel la détermination d'un paramètre de texture associé à chaque pixel comprend :

pour chaque pixel où un changement est survenu, le calcul d'un paramètre de texture associé au pixel ; et
pour chaque pixel où un changement n'est pas survenu, l'identification d'un paramètre de texture pour le pixel égal à la valeur du paramètre de texture pour le pixel dans la paire d'images stéréoscopiques immédiatement précédente.

**8.** Procédé selon l'une quelconque des revendications précédentes, dans lequel la seconde vraisemblance comprend une vraisemblance de contraste / couleur.

**9.** Procédé selon l'une quelconque des revendications 3 à 7 ou selon la revendication 8 lorsqu'elle dépend de l'une quelconque des revendications 3 à 7, dans lequel le fait de déterminer, sur la base d'une image parmi la paire d'images stéréoscopiques immédiatement précédente, pour chaque pixel, si un changement est survenu à l'aide d'un algorithme incluant une ou plusieurs vraisemblances de mouvement pour chaque pixel comprend :

le calcul d'une vraisemblance de mouvement pour chaque pixel ; et
le fait de déterminer si un changement est détecté à l'aide de la vraisemblance de mouvement et d'un algorithme de détection de changement.

**10.** Procédé selon la revendication 9, dans lequel la vraisemblance de mouvement comprend une fonction d'un parmi : un contraste et une vitesse de changement d'intensité.

**11.** Procédé selon l'une quelconque des revendications 1 à 8, dans lequel le fait de déterminer, sur la base d'une image parmi la paire d'images stéréoscopiques immédiatement précédente, pour chaque pixel, si un changement est survenu à l'aide d'un algorithme incluant une ou plusieurs vraisemblances de mouvement pour chaque pixel comprend :

le calcul d'une première vraisemblance de mouvement et d'une seconde vraisemblance de mouvement pour chaque pixel, dans lequel la première vraisemblance de mouvement est associée à une première précondition de segmentation et la seconde vraisemblance de mouvement est associée à une seconde précondition de segmentation ; et
le fait de déterminer si un changement est détecté à l'aide des première et seconde vraisemblances de mouvement et d'un algorithme de détection de changement.

**12.** Procédé selon la revendication 10 ou 11, dans lequel l'algorithme de détection de changement est basé sur des données provenant d'une séquence de tests de paires d'images stéréoscopiques.

**13.** Procédé selon l'une quelconque des revendications précédentes, comprenant en outre :

avant le calcul d'une vraisemblance stéréoscopique pour chaque pixel dans la première paire d'images stéréoscopiques dans la séquence, le filtrage de la première paire d'images stéréoscopiques pour réduire le bruit ; et
avant le fait de déterminer, sur la base d'une image parmi la paire d'images stéréoscopiques immédiatement précédente, pour chaque pixel dans l'image sélectionnée parmi la deuxième paire d'images stéréoscopiques, si un changement est survenu, le filtrage de la deuxième paire d'images stéréoscopiques pour réduire le bruit.

**14.** Procédé selon la revendication 13, dans lequel un filtre de Gauss est utilisé pour filtrer chaque image pour réduire le bruit.

**15.** Procédé selon l'une quelconque des revendications précédentes, dans lequel les images comprennent des images rectifiées.

**16.** Programme d'ordinateur comprenant un code de programme d'ordinateur adapté pour réaliser toutes les étapes de l'une quelconque des revendications précédentes lorsque ledit programme est exécuté sur un ordinateur.

**17.** Programme d'ordinateur selon la revendication 16 effectué sur un support lisible par ordinateur.

**18.** Appareil (1000) comprenant :

un processeur (1001);
une mémoire (1002) agencée pour stocker des instructions exécutables agencées pour amener le processeur à :

calculer une vraisemblance stéréoscopique pour chaque pixel dans une première paire d'images stéréoscopiques dans une séquence de paires d'images stéréoscopiques ; et
réaliser une segmentation d'images sur la première paire d'images stéréoscopiques sur la base de la vraisemblance stéréoscopique calculée pour chaque pixel ;
et **caractérisé en ce que** la mémoire est en outre agencée pour stocker des instructions exécutables agencées pour amener le processeur à :

sélectionner une image parmi une deuxième paire d'images stéréoscopiques dans la séquence et déterminer sur la base d'une image parmi une paire d'images stéréoscopiques immédiatement précédente, pour chaque pixel, si un changement est survenu à l'aide d'un algorithme incluant une ou plusieurs vraisemblances de mouvement pour chaque pixel ;

pour chaque pixel où un changement est survenu, calculer une vraisemblance stéréoscopique pour le pixel dans la deuxième paire d'images stéréoscopiques ;

pour chaque pixel où un changement n'est pas survenu, identifier une vraisemblance stéréoscopique pour le pixel égale à la valeur de la première vraisemblance pour le pixel dans la paire d'images stéréoscopiques immédiatement précédente ; et

réaliser une segmentation d'images sur la deuxième paire d'images stéréoscopiques sur la base de la vraisemblance stéréoscopique calculée pour chaque pixel où un changement est survenu et sur la base de la vraisemblance stéréoscopique identifiée pour chaque pixel où un changement n'est pas survenu.

Perform image segmentation on a first image pair using a likelihood

101

For each pixel in next image, determine if change has been detected

102

Perform image segmentation in next image, only computing the likelihood for those pixels where change detected

103

FIG. 1

Compute colour/contrast likelihood for each pixel in first image pair
201

Compute stereo likelihood for each pixel in first image pair
202

Perform segmentation of image pair based on computed likelihoods
203

For each pixel in one image of next image pair, is change detected?
204

NO

Identify stereo likelihood for pixel in previous image pair
206

YES

Compute stereo likelihood for pixel
205

Compute colour/contrast likelihood for pixel
207

Perform segmentation of image pair based on identified/computed likelihoods
208

FIG. 2

For pixel n, compute motion likelihoods

301

Next n

303

Use change algorithm to determine if change has occured

302

FIG. 3

f(m$_f$/F)                    f(m$_f$/B)

FIG. 4

FIG. 5

FIG. 6

Compute colour/contrast likelihood for each pixel in first
image pair
201

Compute stereo likelihood for each pixel in first image pair
202

Perform segmentation of image pair based on computed
likelihoods
203

For each pixel in one
image of next image pair,
is change detected?
204

NO

Identify stereo likelihood for
pixel in previous image pair
206

YES

Compute stereo likelihood for pixel
205

Identify colour / contrast
likelihood for pixel in
previous image pair
701

Compute colour/contrast
likelihood for pixel
207

Perform segmentation of
image pair based on
identified/computed
likelihoods    208

FIG. 7

FIG. 8

FIG. 9

1000

Processor
1001

Memory
1002

Memory
1003

FIG. 10

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11195027 B
- US 11252017 B

- US 69186505 P

**Non-patent literature cited in the description**

- **CHAI ; SETHURAMAN ; HATRACK.** Mesh-based Depth Map Compression and Transmission for Real-time View-based Rendering. *In Proc. IEEE International Conference on Image Processing,* 2002, vol. 2, 237-240
- **FRANCOIS EDOUARD.** IEEE TRANSACTIONS ON CIRCUITS AND SYSTEMS FOR VIDEO TECHNOLOGY. *Depth-Based Segmentation,* February 1997, vol. 7 (1
- **V. KOLMOGOROV ; A. CRIMINISI ; A. BLAKE ; G. CROSS ; C. ROTHER.** Bi-layer segmentation of binocular stereo. *In Proc. IEEE Conf. Computer Vision and Pattern Recognition,* 2005, vol. 2, 407-414

- **A. CRIMINISI ; G. CROSS ; A. BLAKE ; V. KOLMOGOROV.** Bilayer Segmentation of Live Video. *In Proc. IEEE Conf. Computer Vision and Pattern Recognition,* 2006
- **V. KOLMOGOROV ; A. CRIMINISI ; A. BLAKE ; G. CROSS ; C. ROTHER.** Probabilistic fusion of stereo with colour and contrast for bi-layer segmentation. *IEEE Trans. Pattern Analysis and Machine Intelligence,* 2006